# EUROPÄISCHE PATENTANMELDUNG

(11) **EP 4 556 317 A1**
(43) Veröffentlichungstag der Anmeldung: **21.05.2025**
(21) Anmeldenummer: 24208531.4
(22) Anmeldetag: 24.10.2024
(51) Int. Cl.: B60R 16/023, B60H 1/00, B62D 33/06, B60K 11/04

(54) **FAHRERHAUS FÜR EIN TEILAUTONOM ODER AUTONOM BETREIBBARES NUTZFAHRZEUG UND NUTZFAHRZEUG MIT DEM FAHRERHAUS**

(30) Priorität: 16.11.2023 DE 102023131945
(71) Anmelder: MAN Truck & Bus SE, 80995 München (DE)
(72) Erfinder: Schmitz, Andreas, 80995 München (DE)

(57) **Zusammenfassung**

Die vorliegende Erfindung betrifft ein Fahrerhaus (50A; 50B; 50C; 50D; 50E) für ein teilautonom oder autonom betreibbares Nutzfahrzeug (100A; 100B; 100C; 100D; 100E), vorzugsweise Lastkraftwagen, insbesondere Sattelzugmaschine. Das Fahrerhaus (50A; 50B; 50C; 50D; 50E) umfasst eine Dachkonstruktion (60A; 60B; 60C; 60D; 60E), die einen Innenraum des Fahrerhauses (50A; 50B; 50C; 50D; 50E) oberseitig begrenzt, und eine Steuervorrichtung zum Betreiben des Nutzfahrzeugs (100A; 100B; 100C; 100D; 100E) in einem teilautonomen oder autonomen Fahrbetrieb, wobei die Steuervorrichtung ein Steuergerät (10; 10A) aufweist, vorzugsweise zur Steuerung zumindest einer Sensoreinrichtung und/oder zur Verarbeitung von Sensordaten zumindest einer Sensoreinrichtung. Das Fahrerhaus (50A; 50B; 50C; 50D; 50E) weist ein Kühlmodul (200) zum Kühlen des Steuergeräts (10; 10A) auf. Das Kühlmodul (200) ist zumindest abschnittsweise an oder in einer Dachluke (62) der Dachkonstruktion (60A; 60B; 60C; 60D; 60E) angeordnet. Die Erfindung betrifft ferner ein Nutzfahrzeug (100A; 100B; 100C; 100D; 100E) mit dem Fahrerhaus (50A; 50B; 50C; 50D; 50E).

## Beschreibung

Die Erfindung betrifft ein Fahrerhaus für ein teilautonom oder autonom betreibbares, insbesondere fahrbares, Nutzfahrzeug, und ein Nutzfahrzeug mit dem Fahrerhaus.

Für ein autonomes Fahren von Nutzfahrzeugen, insbesondere Lastkraftwagen, ist ein Betreiben verschiedener Sensoren, z. B. Kameras, Radarsensoren und/oder Lidarsensoren, an den Nutzfahrzeugen notwendig.

Diese Sensoren benötigen ein Steuergerät mit hoher Rechnerkapazität zur Steuerung der Sensoren bzw. zur Weiterverarbeitung der Sensordaten, die im Nutzfahrzeug untergebracht werden muss. Entsprechend wird auch eine leistungsstarke Kühlung für das Steuergerät benötigt, für die ausreichend Bauraum im Nutzfahrzeug bereitgestellt werden muss.

Der Bauraum sollte eine einfache Integration der Kühlung in das Nutzfahrzeug ermöglichen und/oder einen Fahrer im manuellen Betrieb des Nutzfahrzeugs nicht behindern.

Daher ist es Aufgabe der Erfindung, eine verbesserte Anordnung einer Kühlung für ein Steuergerät, für einen teilautonomen oder autonomen Fahrbetrieb eines Nutzfahrzeugs vorgesehen ist, bereitzustellen. Insbesondere ist es z. B. Aufgabe der Erfindung, einen ausreichenden Bauraum vorzusehen, wodurch ein Fahrer im manuellen Fahrbetrieb des Nutzfahrzeugs möglichst nicht behindert wird.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird ein Fahrerhaus (z. B. eine Fahrerkabine) für ein teilautonom oder autonom betreibbares, insbesondere fahrbares, Nutzfahrzeug, vorzugsweise Lastkraftwagen, insbesondere Sattelzugmaschine, bereitgestellt.

Das Fahrerhaus umfasst eine Dachkonstruktion, die einen Innenraum des Fahrerhauses oberseitig begrenzt.

Das Fahrerhaus umfasst ferner eine Steuervorrichtung zum Betreiben des Nutzfahrzeugs in einem teilautonomen oder autonomen Fahrbetrieb. Die Steuervorrichtung umfasst insbesondere ein Steuergerät, z. B. zur Steuerung zumindest einer Sensoreinrichtung und/oder zur Verarbeitung (z. B. Weiterverarbeitung) von Sensordaten der zumindest einen Sensoreinrichtung, insbesondere für den teilautonomen oder autonomen Fahrbetrieb.

Das Fahrerhaus, insbesondere die Steuervorrichtung, umfasst ein Kühlmodul zum Kühlen des Steuergeräts (insbesondere zumindest einer Rechnereinheit des Steuergeräts).

Das Kühlmodul ist insbesondere zumindest abschnittsweise an und/oder in einer Dachluke (z. B. in einem Bereich der Dachluke) der Dachkonstruktion angeordnet.

Das Kühlmodul kann zweckmäßig als kompaktes Modul (und/oder kompakte Einheit und/oder kompakte Anordnung) ausgebildet sein.

Bei der Dachluke kann es sich z. B. um einen üblicherweise bereits vorhandenen Ausschnitt der Dachkonstruktion handeln.

Durch die vorliegende Offenbarung gemäß dem ersten allgemeinen Aspekt wird somit insbesondere eine Lösung bereitgestellt, welche vorteilhaft die Bewegungsfreiheit und den Komfort für den Fahrer bzw. andere Personen im Innenraum des Fahrerhauses vorteilhaft nicht beeinträchtigt.

Ferner wird insbesondere eine Lösung bereitgestellt, die vorteilhaft im Wesentlichen unabhängig von den Abmessungen des Fahrerhauses ist, da für jede Fahrerhausvariante, ob kurz, lang, schmal, breit, niedrig, hoch, immer derselbe, benötigte Bauraum am Dach vorhanden ist.

Auf und/oder in der Dachkonstruktion des Fahrerhauses, z. B. an oder in der Dachluke, kann zumindest eine Lufteinlass- und/oder Luftansaugöffnung für das Kühlmodul positioniert sein, vorzugsweise im Wesentlichen freiliegend, vorzugsweise in Vorwärtsfahrtrichtung des Nutzfahrzeugs, sodass z. B. kein Nebenschlusseffekt mit heißer Luft aus dem Bereich der Motorkühlung auftritt.

Ferner kann durch die Anordnung an oder in der Dachkonstruktion vorteilhaft ein möglichst einfaches Durchführen von Kabeln und/oder Kühlleitungen durch die Fahrerhausaußenhaut bzw. die Fahrerhauskarosserie gegeben sein.

Ist das Steuergerät ebenfalls an oder in der Dachkonstruktion angeordnet, so können vorteilhaft möglichst kurze Kabellängen und/oder kurze Rohrleitungen zwischen dem Kühlmodul und dem Steuergerät für die notwendige Kühlverbindung und gegebenenfalls auch eine elektrische Verbindung ausreichend sein. Ferner kann eine vereinfachte Vormontage der, vorzugsweise gesamten, Steuervorrichtung in der Dachkonstruktion durchgeführt werden. Zusätzlich kann z. B. das Fahrerhaus unabhängig von weiteren Bestandteilen des Nutzfahrzeugs montierbar sein.

Gemäß einer Ausführungsvariante kann das Kühlmodul z. B. zumindest abschnittsweise außerhalb und/oder zumindest abschnittsweise innerhalb des Innenraums des Fahrerhauses angeordnet sein.

Das Kühlmodul kann von der Dachkonstruktion zweckmäßig zumindest abschnittsweise nach oben abstehen.

Gemäß einer Ausführungsvariante kann das Kühlmodul z. B. in und/oder an der Dachluke, vorzugsweise mittels einer Fallsicherung angeordnet (z. B. befestigt) sein, vorzugweise so, dass das Kühlmodul (z. B. im Wesentlichen vollständig) in den Innenraum eintauchbar und/oder beförderbar ist, insbesondere in einem Crashlastfall, vorteilhaft ohne z. B. gänzlich herunterzufallen.

Die Fallsicherung kann z. B. zumindest ein Fangband, zumindest ein Fangseil, eine Fangkulisse und/oder zumindest eine Gleitschiene etc. umfassen.

Das Kühlmodul kann somit im Crashlastfall zweckmäßig nach unten durch- und/oder abtauchen und hat vorteilhaft somit keinen negativen Einfluss z. B. auf die Crashperformance des Fahrerhauses bzw. auf die Eigenschaften der Dachkonstruktion. Die Performance des Daches bzw. der Dachkonstruktion des Fahrerhauses wird somit im Crashlastfall bzw. bei den gesetzlich vorgeschriebenen Crashtests vorteilhaft nicht beeinflusst.

Gemäß einer Ausführungsvariante kann die Dachluke in einem mittleren, insbesondere zentralen, Bereich der Dachkonstruktion ausgebildet sein.

Die Dachluke kann (z. B. oberhalb eines Abschnitts des Innenraums) insbesondere zwischen dem Fahrersitz und dem Beifahrersitz ausgebildet sein.

Eine Höhe des Kühlmoduls kann kleiner sein als ein Abstand der Dachluke zu dem Fahrersitz und/oder dem Beifahrersitz.

Eine Länge und/oder eine Breite des Kühlmoduls kann kleiner sein als ein Abstand zwischen einem Fahrersitz und einem Beifahrersitz.

Gemäß einer Ausführungsform kann das Fahrerhaus, insbesondere die Steuervorrichtung, z. B. eine Kühlvorrichtung und/oder eine Kühlanordnung aufweisen, vorzugsweise zum Kühlen des Steuergeräts und/oder zumindest einer Rechnereinheit des Steuergeräts.

Gemäß einer Ausführungsform kann das Kühlmodul einen ersten Abschnitt und/oder einen zweiten Abschnitt umfassen.

Es ist möglich, dass das Fahrerhaus zumindest eine Lufteinlassöffnung (z. B. eine Kühllufteinlassöffnung) umfasst, die vorzugsweise im Kühlmodul auf und/oder in der Dachkonstruktion angeordnet sein kann und/oder (z. B. zur Kühlluftversorgung) mit dem Steuergerät und/oder dem Kühlmodul (insbesondere fluidisch) verbunden sein kann. Die zumindest eine Lufteinlassöffnung kann z. B. Teil des Kühlmoduls sein. Die zumindest eine Lufteinlassöffnung kann alternativ oder ergänzend z. B. mit der Kühlvorrichtung und/oder der Kühlanordnung (insbesondere fluidisch) verbunden sein.

Die zumindest eine Lufteinlassöffnung kann z. B. zur Außenseite des Fahrerhauses hin geöffnet sein und/oder zum Einlassen von Außenluft und/oder Fahrtwind dienen.

Die zumindest eine Lufteinlassöffnung kann z. B. zumindest eine Luftansaugöffnung umfassen.

Der erste Abschnitt kann z. B. (zweckmäßig zumindest abschnittsweise) außerhalb des Innenraums angeordnet sein und/oder die zumindest eine Lufteinlassöffnung aufweisen.

Der zweite Abschnitt kann z. B. (zweckmäßig zumindest abschnittsweise) innerhalb des Innenraums angeordnet sein.

Gemäß einer Ausführungsform kann der erste Abschnitt eine äußere Abdeckung mit der zumindest einen Lufteinlassöffnung und/oder zumindest einem Luftleitelement zum Einleiten von Luft aufweisen.

Die zumindest eine Lufteinlassöffnung und/oder das zumindest eine Luftleitelement kann insbesondere im Wesentlichen in Vorwärtsfahrtrichtung des Nutzfahrzeugs ausgerichtet sein und/oder auf und/oder in der Dachkonstruktion und/oder im Kühlmodul ausgebildet sein.

Der erste Abschnitt und/oder die äußere Abdeckung kann einen Tragrahmen aufweisen, an dem z. B. das Luftleitelement befestigt sein kann.

Der erste Abschnitt und/oder die äußere Abdeckung kann z. B. die Kühlanordnung aufweisen.

Die Kühlanordnung kann z. B. zum Kühlen von (insbesondere über die zumindest eine Lufteinlassöffnung eingelassener) Luft und/oder zum Kühlen zumindest einer Rechnereinheit dienen.

Die Kühlanordnung kann z. B. innerhalb der äußeren Abdeckung (und/oder in einem durch die äußere Abdeckung gebildeten Innenraum) untergebracht sein.

Die Kühlanordnung kann z. B. einen Kühler, eine Kühlmittel-Pumpe, einen Verdampfer, ein Expansionsventil und/oder einen Kondensator umfassen.

Der erste Abschnitt, die äußere Abdeckung und/oder die Kühlanordnung kann z. B. zumindest einen Lüfter zum Ansaugen von (insbesondere über die zumindest eine Lufteinlassöffnung einlassbarer) Luft aufweisen.

Der zumindest eine Lüfter kann vorzugsweise innerhalb der äußeren Abdeckung (und/oder in dem durch die äußere Abdeckung gebildeten Innenraum) untergebracht sein.

Die Kühlanordnung kann z. B. zwischen der zumindest einen Lufteinlassöffnung und/oder dem zumindest einen Luftleitelement und dem zumindest einen Lüfter angeordnet sein.

Der zumindest ein Lüfter kann mehrere, z. B. nebeneinander angeordnete, Lüfter umfassen.

Die Lüfter können z. B. parallel und/oder in Reihe geschaltet sein.

Gemäß einer Ausführungsvariante kann der zweite Abschnitt die Kühlvorrichtung, eine innere Abdeckung und/oder einen Tragrahmen aufweisen.

Innerhalb der inneren Abdeckung (und/oder in einem durch die innere Abdeckung gebildeten Innenraum) und/oder des Tragrahmens kann die Kühlvorrichtung z. B. zur steuerbaren und/oder regelbaren Kühlung des Steuergeräts, insbesondere zumindest einer Rechnereinheit, mittels eines Kühlmittels untergebracht sein. Das Kühlmittel kann vorzugsweise durch die eingelassene Luft kühlbar sein.

Die Kühlvorrichtung und/oder die Kühlanordnung kann z. B. zumindest abschnittsweise außerhalb und/oder zumindest abschnittsweise innerhalb des Innenraums des Fahrerhauses angeordnet sein.

Die Kühlvorrichtung und/oder die Kühlanordnung kann z. B. zumindest abschnittsweise auf und/oder in der Dachkonstruktion angeordnet sein.

Es ist möglich, dass die zumindest eine Lufteinlassöffnung (z. B. zur Kühlluftversorgung) mit der Kühlvorrichtung und/oder der Kühlanordnung (insbesondere fluidisch) verbunden sein kann.

Gemäß einer Ausführungsform kann das Fahrerhaus z. B. eine Rückwandkonstruktion, die den Innenraum des Fahrerhauses rückseitig begrenzt, und/oder z. B. eine Bodenkonstruktion, die den Innenraum bodenseitig begrenzt, umfassen.

Das Steuergerät kann insbesondere zumindest abschnittweise an oder in der Dachkonstruktion, an oder in der Rückwandkonstruktion und/oder auf oder in der Bodenkonstruktion (insbesondere anliegend oder beabstandet) angeordnet sein, z. B (vorzugsweise zumindest abschnittsweise) im Innenraum des Fahrerhauses.

Dadurch kann das Steuergerät vorteilhaft vor Umwelt- und Fremdeinflüssen geschützt werden (z. B. Regen, Schnee und/oder hohen oder tiefen Temperaturen, und/oder Crash-Szenarien etc.).

Das Steuergerät kann zweckmäßig als kompaktes Modul (und/oder kompakte Einheit und/oder kompakte Anordnung) ausgebildet sein.

Die Anordnung des Steuergeräts vorzugsweise (zumindest abschnittsweise) innerhalb des Fahrerhauses liefert vorteilhafterweise einen möglichst guten Schutz für das Steuergerät vor möglichen Umwelt- und Fremdeinflüssen. Im Vergleich dazu würde eine Anordnung des Steuergeräts außerhalb des Fahrerhauses, z. B. hinter dem Fahrerhaus, möglicherweise Vorteile bei der Wahl des Bauraums bzw. der Integration des Steuergeräts bieten, jedoch wäre das Steuergerät ohne weitere Schutzmaßnahmen nicht ausreichend vor möglichen Umwelt- und Fremdeinflüssen geschützt.

Ferner vorteilhaft kann je nach Abmessungen des Fahrerhauses bzw. des Innenraums des Fahrerhauses variabel ein geeigneter Bauraum gewählt und das Steuergerät entsprechend im Innenraum untergebracht werden. Der geeignete Bauraum kann sich insbesondere dadurch auszeichnen, dass ein Fahrer bei einem Mischbetrieb autonom/manuell, insbesondere im manuellen Fahrbetrieb des Nutzfahrzeugs, und/oder beim Nutzen des Innenraums des Fahrerhauses nicht eingeschränkt wird. Somit können vorteilhaft Lösungen für eine geeignete Anordnung des Steuergeräts in möglichst allen vorhandenen und zukünftigen Fahrerhausvarianten bereitgestellt werden.

Das Steuergerät kann zumindest abschnittweise an der Dachkonstruktion anliegend oder beabstandet zur Dachkonstruktion, vorzugsweise mit einem Abstand kleiner 100 cm, 50 cm, 20 cm oder 10 cm, angeordnet sein.

Alternativ oder ergänzend kann das Steuergerät zumindest abschnittweise an der Rückwandkonstruktion anliegend oder beabstandet zur Rückwandkonstruktion, vorzugsweise mit einem Abstand kleiner 100 cm, 50 cm, 20 cm oder 10 cm, angeordnet sein.

Ferner alternativ oder ergänzend kann das Steuergerät zumindest abschnittweise auf der Bodenkonstruktion anliegend oder beabstandet zur Bodenkonstruktion, vorzugsweise mit einem Abstand kleiner 100 cm, 50 cm, 20 cm oder 10 cm, angeordnet sein.

Das Fahrerhaus kann zweckmäßig ferner eine fahrerseitige Seitenwandkonstruktion, in der vorzugsweise eine Fahrertür angeordnet ist, und eine beifahrerseitige Seitenwandkonstruktion, in der vorzugsweise eine Beifahrertür angeordnet ist, umfassen. Die fahrerseitige Seitenwandkonstruktion und die beifahrerseitige Seitenwandkonstruktion können den Innenraum zu zwei gegenüberliegenden Seiten hin begrenzen.

Das Fahrerhaus kann zweckmäßig ferner eine Frontkonstruktion umfassen, die den Innenraum frontseitig (und/oder zu einer der Rückwandkonstruktion gegenüberliegenden Seite hin) begrenzt. In der Frontkonstruktion kann z. B. eine Windschutzscheibe eingesetzt sein.

Gemäß einer Ausführungsform kann das Fahrerhaus eine Ablage, die an der Dachkonstruktion und/oder an der Rückwandkonstruktion befestigt ist, umfassen. Die Ablage kann insbesondere eine Dachablage und/oder ein Rückwandschrank sein. Das Steuergerät ist, vorzugsweise mittig und/oder seitlich, in die Ablage integriert. Beispielsweise kann das Steuergerät in einem, vorzugsweise mittigen und/oder seitlichen, Ablagefach der Ablage untergebracht sein.

Die Ablage kann mehrere, z. B. verschließbare, Ablagefächer aufweisen. Das Steuergerät kann in einem mittleren oder einem seitlichen Ablagefach der mehreren Ablagefächer untergebracht sein.

Die Ablage kann sich horizontal entlang der Rückwandkonstruktion erstrecken, insbesondere entlang einer gesamten Breite der Rückwandkonstruktion (und/oder zwischen der fahrerseitigen Seitenwandkonstruktion und der beifahrerseitigen Seitenwandkonstruktion) erstrecken.

Die Ablage kann (z. B. anliegend) ausschließlich von der Dachkonstruktion umgeben sein.

Gemäß einer Ausführungsform kann das Steuergerät hängend an der Dachkonstruktion angeordnet, insbesondere an der Dachkonstruktion befestigt, sein.

Gemäß einer Ausführungsvariante kann das Fahrerhaus eine Liege, die vorzugsweise an der Rückwandkonstruktion angeordnet ist, umfassen. Die Liege kann z. B eine Ruheliege und/oder ein Bett für den Fahrer sein. Das Steuergerät kann oberhalb der Liege angeordnet sein und z. B. eine zu einem Kopfbereich und/oder Fußbereich der Liege zumindest abschnittweise abgeschrägte Seitenwand (z. B. eines Außengehäuses und/oder einer Außenverkleidung des Steuergeräts) aufweisen. Durch die Anordnung über der Liege wird weiterhin eine Liegemöglichkeit erlaubt und der nutzbare Innenraum möglichst nicht eingeschränkt.

Ein Abstand zwischen der Liege und dem Steuergerät kann größer als 30 cm, z. B. 40 cm, sein.

Die Liege kann sich horizontal entlang der Rückwandkonstruktion erstrecken, insbesondere entlang einer gesamten Breite der Rückwandkonstruktion (und/oder zwischen der fahrerseitigen Seitenwandkonstruktion und der beifahrerseitigen Seitenwandkonstruktion) erstrecken.

Die Anordnung des Steuergeräts an oder in der Dachkonstruktion, z. B. hängend und/oder in die Ablage integriert, ist insbesondere für ein hohes Fahrerhaus, wobei die Dachkonstruktion z. B. als Hochdach ausgeführt ist, bzw. ein großes Fahrerhaus (z. B. breit, lang und mit Hochdach) bevorzugt. Dadurch wird die Bewegungsfreiheit und/oder eine Sicht des Fahrers bzw. einer anderen Person im Innenraum möglichst nicht eingeschränkt.

Die Unterbringung des Steuergeräts an oder in der Dachkonstruktion ist ferner bevorzugt, da vorteilhaft hier möglichst kurze Kabellängen zu der zumindest einen Sensoreinrichtung, die üblicherweise im Bereich der Dachkonstruktion, z. B. außerhalb oder innerhalb des Fahrerhauses, angeordnet ist, gewährleistet werden kann. Ferner kann eine vereinfachte Vormontage in oder an der Dachkonstruktion durchgeführt werden.

Gemäß einer Ausführungsform kann das Fahrerhaus einen Luftfilterkasten, vorzugsweise an der Rückwandkonstruktion und/oder auf der Bodenkonstruktion, umfassen. Das Steuergerät (und z. B. die Kühlvorrichtung, die Kühlanordnung und/oder das Kühlmodul, die weiter unten beschrieben werden) kann auf oder vor dem Luftfilterkasten angeordnet sein.

Das Steuergerät kann, insbesondere direkt und/oder anliegend, auf der Bodenkonstruktion angeordnet sein, wobei der Luftfilterkasten z. B. zwischen dem Steuergerät und der Rückwandwandkonstruktion angeordnet sein kann.

Das Steuergerät kann auf dem Luftfilterkasten und an der Rückwandkonstruktion angeordnet sein. Das auf dem Luftfilterkasten angeordnete Steuergerät kann z. B. ein Fenster der Rückwandkonstruktion zumindest abschnittsweise überdecken.

Der Luftfilterkasten kann an (insbesondere einem mittleren, unteren Abschnitt) der Rückwandkonstruktion angeordnet und/oder ausgebildet sein. Der Luftfilterkasten kann auf (insbesondere einem mittleren, hinteren Abschnitt) der Bodenkonstruktion angeordnet und/oder ausgebildet sein.

Gemäß einer Ausführungsform kann das Fahrerhaus einen Fahrersitz und einen Beifahrersitz umfassen.

Das Steuergerät kann z. B. zumindest abschnittsweise zwischen dem Fahrersitz und dem Beifahrersitz, vorzugsweise (insbesondere direkt und/oder anliegend) auf (einem mittleren Abschnitt) der Bodenkonstruktion, angeordnet sein. Durch diese Anordnung hat das Steuergerät z. B. im Crashlastfall vorteilhaft möglichst keinen Crasheinfluss auf einen Fahrer bzw. Beifahrer.

Es ist auch möglich, dass das Fahrerhaus den Fahrersitz (und z. B. keinen Beifahrersitz) umfasst und das Steuergerät zumindest abschnittsweise neben dem Fahrersitz angeordnet ist.

Der mittlere Abschnitt der Bodenkonstruktion, auf dem das Steuergerät angeordnet ist, kann erhöht gegenüber zumindest einem seitlichen Abschnitt der Bodenkonstruktion, auf dem der Fahrersitz und/oder der Beifahrersitz angeordnet ist, ausgebildet sein. Das Steuergerät kann z. B., insbesondere vollständig, unterhalb eines Fensters der Rückwandkonstruktion angeordnet sein.

Das Steuergerät kann z. B. eine zum Beifahrersitz hin und/oder von der Rückwandkonstruktion weg zumindest abschnittsweise, vorzugsweise nach unten, abgeschrägte Seitenwand (z. B. eines Außengehäuses und/oder einer Außenverkleidung des Steuergeräts) aufweisen. Dadurch wird vorteilhaft die Sicht des Fahrers z. B. in Richtung der Beifahrerseite möglichst nicht eingeschränkt.

Die Anordnung des Steuergeräts auf der Bodenkonstruktion, z. B. direkt oder auf dem Luftfilterkasten, ist insbesondere für ein niedriges Fahrerhaus, wobei die Dachkonstruktion z. B. als Flachdach ausgeführt ist, bzw. ein kleines Fahrerhaus (schmal, kurz und mit Flachdach) bevorzugt.

Gemäß einer Ausführungsvariante kann das Steuergerät zumindest eine Rechnereinheit umfassen, vorzugsweise mehrere, insbesondere übereinandergestapelte, Rechnereinheiten.

Es ist möglich, dass das Steuergerät und/oder die zumindest eine Rechnereinheit mit der Kühlvorrichtung, der Kühlanordnung und/oder dem Kühlmodul zum Kühlen des Steuergeräts und/oder der zumindest einen Rechnereinheit (zweckmäßig direkt oder indirekt) verbunden ist.

Das Steuergerät und/oder die zumindest eine Rechnereinheit kann z. B. (jeweils) einen Analog-Digital-Umsetzer (z. B. ADC - Analog-to-Digital-Converter) umfassen.

Eine Anzahl der zumindest einen Rechnereinheit kann z. B. variabel und/oder veränderbar sein.

Gemäß einer Ausführungsform kann die Kühlvorrichtung, die Kühlanordnung und/oder das Kühlmodul z. B. einen Kühlmittelausgleichsbehälter, eine Pumpe (insbesondere Kühlmittel-Pumpe), zumindest einen Lüfter und/oder ein Steuerventil, insbesondere ein Thermostatventil, zur steuerbaren und/oder regelbaren Kühlung der zumindest einen Rechnereinheit mittels eines Kühlmittels aufweisen. Alternativ oder ergänzend kann die Kühlvorrichtung, die Kühlanordnung und/oder das Kühlmodul z. B. einen Verdampfer, einen Kondensator und/oder ein Expansionsventil insbesondere für Kühlmittel (z. B. Kältemittel) aufweisen.

Sofern mehrere Lüfter vorgesehen sind, können die Lüfter z. B. parallel und/oder in Reihe geschaltet werden.

Die zumindest eine Rechnereinheit kann z. B. von dem Kühlmittel umströmbar sein und/oder zumindest einen Kanal zur Hindurchleitung des Kühlmittels aufweisen.

Gemäß einer Ausführungsform kann die zumindest eine Rechnereinheit in einem ersten Gehäuse und die Kühlvorrichtung in einem zweiten Gehäuse angeordnet sein. Das erste Gehäuse und das zweite Gehäuse können z. B. separate Gehäuse darstellen und/oder eine z. B. kompakte Anordnung (z. B. Einheit) bilden.

Es ist möglich, dass das erste Gehäuse und das zweite Gehäuse z. B. aneinander anliegen und/oder z. B. lösbar oder unlösbar aneinandergekoppelt sind.

Alternativ oder ergänzend kann z. B. zumindest ein Kühlmitteldurchgang zwischen dem ersten Gehäuse und dem zweiten Gehäuse ausgebildet sein. Der zumindest ein Kühlmitteldurchgang kann z. B. zur Herstellung eines Kühlmittelkreislaufs zwischen der Kühlvorrichtung und/oder dem Kühlmodul und der zumindest einen Rechnereinheit vorgesehen sein.

Durch die Anordnung in vorzugsweise zwei separaten Gehäusen können die zumindest eine Rechnereinheit und die Kühlvorrichtung modular gestaltet werden, sodass z. B. das Steuergerät je nach vorhandenem Bauraum im Innenraum des Fahrerhauses konfigurierbar ist.

Das erste Gehäuse kann ein Traggestell zum Tragen der zumindest einen Rechnereinheit aufweisen. Das erste Gehäuse kann z. B. nachrüstbar zur Aufnahme zumindest einer weiteren Rechnereinheit ausgebildet sein.

Das Steuergerät kann ein Außengehäuse und/oder eine Außenverkleidung aufweisen, in dem das erste Gehäuse und das zweite Gehäuse aufgenommen sind. Das Außengehäuse und/oder die Außenverkleidung kann das erste Gehäuse und das zweite Gehäuse zumindest abschnittsweise umgeben.

Das zweite Gehäuse kann neben, insbesondere in Längsrichtung des ersten Gehäuses neben, oder auf dem ersten Gehäuse angeordnet sein.

Zumindest eine Kante des zweiten Gehäuses kann bündig an zumindest einer Kante des ersten Gehäuses angeordnet sein.

Eine Längsrichtung des zweiten Gehäuses kann im Wesentlichen parallel (und/oder senkrecht) zu einer Längs-, Breiten- oder Hochrichtung des ersten Gehäuses verlaufen.

Eine Anordnung des ersten Gehäuses und des zweiten Gehäuses kann eine im Wesentlichen plane Rückseite (und/oder im Wesentlichen plane, der Rückwandkonstruktion zugewandten Seite) ausbilden.

Das erste Gehäuse und das zweite Gehäuse können jeweils kastenförmig ausgebildet sein.

Das erste Gehäuse kann eine Länge von mindestens 50 cm, z. B. 55 cm, eine Breite von mindestens 30 cm, z. B. 35 cm, und/oder eine Höhe von mindestens 40 cm, z. B. 45 cm, aufweisen.

Das zweite Gehäuse kann eine Länge von mindestens 30 cm, eine Breite von mindestens 15 cm und/oder eine Höhe von mindestens 15 cm aufweisen.

Die Anordnung des ersten Gehäuses und des zweiten Gehäuses kann ein Volumen von mindestens 90 I, z. B. 100 I oder 105 I, aufweisen.

Beispielsweise kann das zweite Gehäuse neben dem ersten Gehäuse, insbesondere anliegend, angeordnet sein und die Längsrichtung des zweiten Gehäuses kann im Wesentlichen senkrecht zur Längsrichtung des ersten Gehäuses verlaufen. Eine Länge des zweiten Gehäuses kann gleich oder kleiner einer Länge des ersten Gehäuses sein. Eine obere Kante des zweiten Gehäuses kann bündig an einer oberen Kante des ersten Gehäuses angeordnet sein und/oder eine nach unten verlaufende Kante des zweiten Gehäuses kann bündig an eine nach unten verlaufende Kante des ersten Gehäuses angeordnet sein. Die Anordnung des ersten Gehäuses und des zweiten Gehäuses kann rein beispielhaft eine Länge von 71,8 cm, eine Breite von 35 oder 55 cm, und eine Höhe von 45 cm aufweisen.

Alternativ kann das zweite Gehäuse auf dem ersten Gehäuse, insbesondere anliegend, angeordnet sein und die Längsrichtung des zweiten Gehäuses kann im Wesentlichen parallel zur Längsrichtung des ersten Gehäuses verlaufen. Eine Länge des zweiten Gehäuses kann im Wesentlichen gleich einer Länge des ersten Gehäuses sein. Zumindest eine untere Kante des zweiten Gehäuses kann bündig an einer oberen Kante des ersten Gehäuses angeordnet sein. Vorzugsweise können drei untere Kanten des zweiten Gehäuses bündig an jeweils einer oberen Kante des ersten Gehäuses angeordnet sein. Das zweite Gehäuse kann bündig auf dem ersten Gehäuse angeordnet sein und/oder das erste Gehäuse seitlich nicht überragen. Die Anordnung des ersten Gehäuses und des zweiten Gehäuses kann rein beispielhaft eine Länge von 55 cm, eine Breite von 35 cm, und eine Höhe von 63,3 cm aufweisen.

Ist das Steuergerät in die Ablage integriert, so kann das zweite Gehäuse vorzugsweise neben dem ersten Gehäuse angeordnet sein, wobei die Längsrichtung des zweiten Gehäuses insbesondere parallel zur Hochrichtung des ersten Gehäuses verläuft.

Ist das Steuergerät z. B. hängend an der Dachkonstruktion angeordnet, so kann das zweite Gehäuse vorzugsweise neben dem ersten Gehäuse, insbesondere zum Kopfbereich der Liege hin neben dem ersten Gehäuse, angeordnet sein. Die Längsrichtung des zweiten Gehäuses kann parallel zur Hochrichtung oder zur Breitenrichtung des ersten Gehäuses verlaufen. Die zumindest abschnittweise abgeschrägte Seitenwand kann insbesondere unterhalb des zweiten Gehäuses ausgebildet sein.

Ist das Steuergerät auf dem Luftfilterkasten oder (direkt) auf der Bodenkonstruktion angeordnet, so kann das zweite Gehäuse vorzugsweise auf dem ersten Gehäuse angeordnet sein. Die zumindest abschnittweise abgeschrägte Seitenwand kann insbesondere zumindest abschnittsweise vor dem zweiten Gehäuse ausgebildet sein.

Gemäß einer Ausführungsvariante kann das Steuergerät mehrere Rechnereinheiten aufweisen, die z. B. kachelartig an vorzugsweise der Rückwandkonstruktion angeordnet sein können. Die mehreren Rechnereinheiten und z. B. die Kühlvorrichtung können z. B. kachelartig angeordnet sein, wobei jede der mehreren Rechnereinheiten und die Kühlvorrichtung z. B. im Wesentlichen gleiche Maße aufweisen können.

Die mehreren, zweckmäßig kachelartig angeordneten Rechnereinheiten und vorzugsweise die Kühlvorrichtung können an einem mittleren Abschnitt der Rückwandkonstruktion angeordnet sein. Der mittlere Abschnitt kann sich insbesondere hinter einem Bereich zwischen dem Fahrersitz und dem Beifahrersitz befinden. Durch diese Anordnung hat das Steuergerät im Crashlastfall möglichst keinen Crasheinfluss auf einen Fahrer bzw. Beifahrer.

Gemäß einer Ausführungsform kann zumindest ein Kanal (z. B. zumindest ein Rohr, zumindest ein Schlauch und/oder zumindest eine Luft- und/oder Kühlmittel-Durchlassöffnung etc.) zur Luft- und/oder Kühlmittelleitung und/oder mit zumindest einer Stromleitung zwischen dem Kühlmodul, der Kühlvorrichtung und/oder der Kühlanordnung und dem Steuergerät bereitgestellt sein. Im Kontext der Erfindung kann z. B. zumindest ein Kanal für zumindest eine Luftund/oder Kühlmittelleitung und/oder für zumindest eine Stromleitung zwischen dem Kühlmodul, der Kühlvorrichtung und/oder der Kühlanordnung und dem Steuergerät bereitgestellt werden.

Der zumindest eine Kanal kann z. B. die Kühlvorrichtung, das Kühlmodul und/oder die Kühlanordnung insbesondere mit dem Steuergerät, zweckmäßig zumindest einer Rechnereinheit des Steuergeräts, verbinden, vorzugsweise zur Herstellung eines Kühlmittelkreislaufs.

Der zumindest eine Kanal kann sich z. B. zumindest abschnittsweise außerhalb und/oder zumindest abschnittsweise innerhalb des Fahrerhauses erstrecken.

Die zumindest eine Stromleitung kann z. B. zum Betreiben der Kühlvorrichtung, der Kühlanordnung und/oder der Kühlvorrichtung dienen.

Es ist möglich, dass der zumindest eine Kanal eingangsseitig (zweckmäßig direkt oder indirekt) z. B. mit der zumindest einen Lufteinlassöffnung verbunden sein kann.

Die im ersten Abschnitt zweckmäßig eingelassene und/oder gekühlte Luft kann z. B. zur Kühlung des Kühlmittels der Kühlvorrichtung und/oder der Kühlanordnung dienen (und z. B. in den zweiten Abschnitt einleitbar sein). Alternativ oder ergänzend kann der zumindest eine Kanal z. B. zumindest eine Luftleitung zur Weiterleitung der eingelassenen und/oder gekühlten Luft zum Steuergerät aufweisen, insbesondere zur Kühlung des Kühlmittels der Kühlvorrichtung und/oder der Kühlanordnung und/oder zur zweckmäßig direkten Kühlung der zumindest einen Rechnereinheit.

Es ist möglich, dass das Steuergerät, die Kühlvorrichtung, die Kühlanordnung und/oder das Kühlmodul z. B. zumindest abschnittsweise insbesondere zwischen einem Fahrersitz und einem Beifahrersitz angeordnet ist, z. B. zumindest abschnittsweise oberhalb, unterhalb, vor und/oder hinter dem Fahrersitz und/oder dem Beifahrersitz. Alternativ oder ergänzend ist es möglich, dass das Steuergerät, die Kühlvorrichtung, die Kühlanordnung und/oder das Kühlmodul z. B. zumindest abschnittsweise auf gleicher Höhe wie der Fahrersitz und/oder der Beifahrersitz angeordnet ist.

Es sind Ausführungsformen möglich, bei denen das Steuergerät, die Kühlvorrichtung, die Kühlanordnung und/oder das Kühlmodul relativ zum Fahrersitz und/oder zum Beifahrersitz z. B. zumindest abschnittsweise seitlich innen oder seitlich außen angeordnet ist.

Es ist möglich, dass das Kühlmodul, die Kühlanordnung und/oder die Kühlvorrichtung z. B. zumindest abschnittweise an oder in der Dachkonstruktion, an oder in der Rückwandkonstruktion und/oder auf oder in der Bodenkonstruktion angeordnet ist, vorzugsweise zumindest abschnittsweise außerhalb und/oder innerhalb des Fahrerhauses. Die Kühlanordnung, die Kühlvorrichtung und/oder das Kühlmodul dienen vorzugsweise zum (zweckmäßig direkten oder indirekten) Kühlen des Steuergeräts, insbesondere zumindest einer Rechnereinheit.

Gemäß einer Ausführungsform kann das Fahrerhaus ferner zumindest eine Sensoreinrichtung umfassen. Die zumindest eine Sensoreinrichtung kann insbesondere signaltechnisch und vorzugsweise elektrisch mit dem Steuergerät verbunden sein.

Die zumindest eine Sensoreinrichtung kann insbesondere an einer Außenseite des Fahrerhauses, z. B. oberhalb einer Fahrertür und/oder einer Beifahrertür, und/oder im Innenraum des Fahrerhauses, z. B. hinter der Windschutzscheibe, angeordnet sein.

Die zumindest eine Sensoreinrichtung kann zweckmäßig zur Erfassung von zumindest einer Umgebungsgröße ausgebildet sein.

Das Steuergerät und/oder die zumindest eine Sensoreinrichtung dient vorzugsweise zum Betreiben des Nutzfahrzeugs im teilautonomen oder autonomen Fahrbetrieb.

Gemäß einem weiteren allgemeinen Aspekt der Erfindung wird ein Nutzfahrzeug, vorzugsweise Lastkraftwagen, insbesondere Sattelzugmaschine, mit einem Fahrerhaus wie hierin offenbart bereitgestellt. Das Nutzfahrzeug ist vorzugsweise teilautonom oder autonom betreibbar, insbesondere fahrbar.

Die Kühlanordnung, die Kühlvorrichtung und/oder das Kühlmodul kann z. B. einen Kühler, eine Kühlmittel-Pumpe, zumindest einen Lüfter, einen Verdampfer, ein Expansionsventil und/oder einen Kondensator umfassen.

Die Kühlanordnung, die Kühlvorrichtung und/oder das Kühlmodul kann im Kontext der Erfindung z. B. als passive Kühlung ausgebildet sein und/oder einen Kühlkreislauf umfassen.

Die Kühlanordnung, die Kühlvorrichtung und/oder das Kühlmodul kann im Kontext der Erfindung z. B. als aktive Kühlung ausgebildet sein und/oder einen Kältekreislauf umfassen.

Im Kontext der Erfindung ist es z. B. möglich, dass das Kühlmittel z. B. ein Kältemittel sein kann oder ein Kältemittel umfassen kann.

Das Nutzfahrzeug kann insbesondere in Abhängigkeit von der zumindest einen erfassten Umgebungsgröße in einem teilautonomen oder autonomen Fahrbetrieb betreibbar sein.

Die zumindest eine Umgebungsgröße kann eine Erfassung eines Fremdobjekts, z. B. eines Fremdfahrzeugs, Fahrbahnmarkierungen, Fahrbahnbegrenzungen, eines Fußgängers und/oder eines Gebäudes, umfassen. Die zumindest eine Umgebungsgröße kann zumindest eine Messgröße des Fremdobjekts, z. B. eine Geschwindigkeit, ein Abstand, eine Position und/oder Maße (zweckmäßig Höhe, Länge und/oder, Breite), umfassen.

Zumindest ein Erfassungsbereich der zumindest einen Sensoreinrichtung kann sich z. B. (in Vorwärtsfahrtrichtung des Nutzfahrzeugs) nach vorne, zur Seite und/oder nach hinten erstrecken. Die zumindest eine Sensoreinrichtung kann in Vorwärtsfahrtrichtung des Nutzfahrzeugs nach vorne, zur Seite und/oder nach hinten schauend angeordnet sein. Die zumindest eine erfasste Umgebungsgröße kann z. B. für (teil-)autonome Ausweichvorgänge, Bremsvorgänge, Spurwechsel und/oder Abbiegevorgänge nutzbar sein.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figuren 1A, 1B: schematische Vorder- und Seitenansichten von Nutzfahrzeugen 100A, 100B, 100C, 100D, 100E, jeweils mit einem Fahrerhaus 50A, 50B, 50C, 50D, 50E, gemäß Ausführungsbeispielen der vorliegenden Offenbarung,
- Figur 2: eine schematische Ansicht eines Steuergeräts 10 nach einem Ausführungsbeispiel der vorliegenden Offenbarung,
- Figur 3: schematische Schnittansichten eines oberen Bereichs des Fahrerhauses 50A, 50B mit einer Ablage 80 gemäß einem Ausführungsbeispiel der vorliegenden Offenbarung,
- Figur 4: eine schematische Schnittansicht des Fahrerhauses 50C mit einer Liege 90 gemäß einem Ausführungsbeispiel der vorliegenden Offenbarung,
- Figur 5: schematische Schnittansichten des Fahrerhauses 50D mit einem einen Luftfilterkasten 40 gemäß einem Ausführungsbeispiel der vorliegenden Offenbarung,
- Figur 6: schematische Schnittansichten des Fahrerhauses 50E gemäß einem Ausführungsbeispiel der vorliegenden Offenbarung,
- Figur 7: weitere schematische Schnittansichten des Fahrerhauses 50D, 50E,
- Figuren 8, 9: schematische Schnittansichten des Fahrerhauses 50D, 50E mit einem alternativen Steuergerät 10A gemäß einem Ausführungsbeispiel der vorliegenden Offenbarung,
- Figur 10: schematische Seitenansichten der Nutzfahrzeuge 100A, 100B, 100C, 100D, 100E, jeweils mit dem Fahrerhaus 50A, 50B, 50C, 50D, 50E und einem Kühlmodul 200 gemäß Ausführungsbeispielen der vorliegenden Offenbarung,
- Figur 11: schematische Schnittansichten eines oberen Bereichs des Fahrerhauses 50A, 50B, 50C, 50D, 50E mit dem Kühlmodul 200,
- Figur 12: schematische Schnittansichten des Fahrerhauses 50A, 50B, 50C, 50D, 50E mit einem unteren Abschnitt 230 des Kühlmoduls 200, dem Steuergerät 10 und einem Kanal 250 zwischen dem Kühlmodul 200 und dem Steuergerät 10,
- Figur 13: eine schematische Ansicht einer Dachkonstruktion 60A, 60B, 60C, 60D, 60E mit einer Dachluke 62, ohne und mit eingebautem Kühlmodul 200, gemäß einem Ausführungsbeispiel der vorliegenden Offenbarung,
- Figur 14: eine schematische Ansicht eines oberen Abschnitts 210 des Kühlmoduls 200, und
- Figur 15: schematische Darstellungen des Fahrerhauses 50A, 50B, 50C, 50D, 50E mit dem Kühlmodul 200 in einem Crashlastfall.

Die in den Figuren gezeigten Ausführungsbeispiele stimmen zumindest teilweise überein, so dass ähnliche oder identische Teile mit den gleichen Bezugszeichen versehen sind und zu deren Erläuterung auch auf die Beschreibung der anderen Ausführungsbeispiele bzw. Figuren verwiesen wird, um Wiederholungen zu vermeiden.

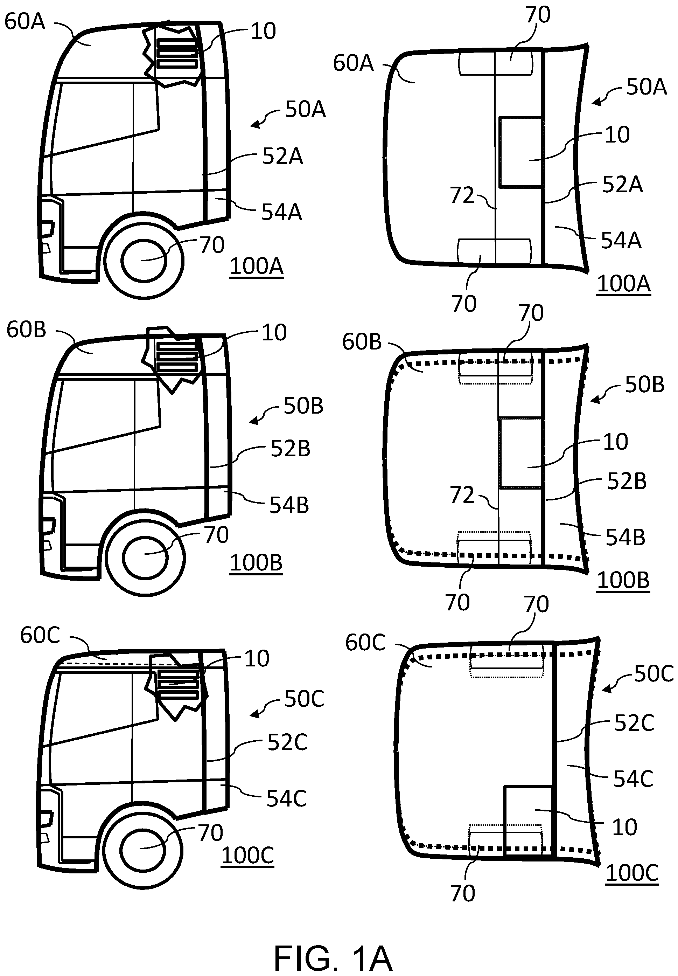

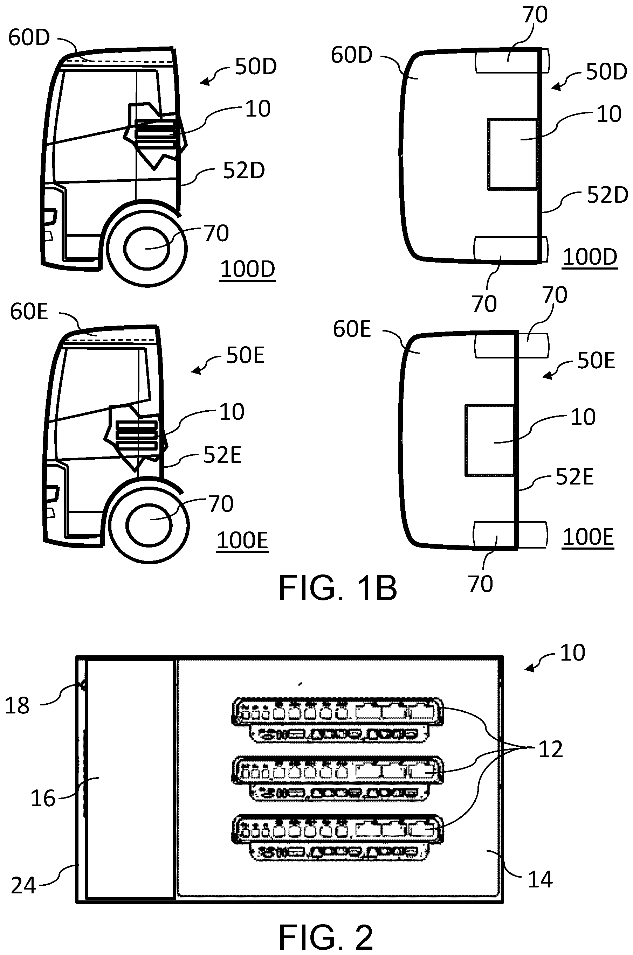

Die Figuren 1A und 1B zeigen verschiedene Ausführungsformen eines Nutzfahrzeugs 100A, 100B, 100C, 100D, 100E, jeweils mit einem Fahrerhaus 50A, 50B, 50C, 50D, 50E. Es versteht sich, dass das Fahrerhaus 50A, 50B, 50C, 50D, 50E auch unabhängig vom Nutzfahrzeug 100A, 100B, 100C, 100D, 100E einen Aspekt der vorliegenden Offenbarung darstellt.

Die jeweilige linke Darstellung zeigt einen vorderen Abschnitt des Nutzfahrzeugs 100A, 100B, 100C, 100D, 100E in einer Seitenansicht. Die jeweils irreguläre Form, welche das Steuergerät 10 umgibt, soll lediglich bildlich eine Schnittansicht in diesem Bereich anzeigen, um das innerhalb des Fahrerhauses 50A, 50B, 50C, 50D, 50E angeordnete Steuergerät 10 darstellen zu können.

Die jeweilige rechte Darstellung zeigt eine Draufsicht des vorderen Abschnitts des Nutzfahrzeugs 100A, 100B, 100C, 100D, 100E. Hierbei sind die Lagen des Steuergeräts 10, der Vorderräder 70 und gegebenenfalls der Antriebsachse 72 eingezeichnet, die in der Draufsicht selbstverständlich durch das Fahrerhaus 50A, 50B, 50C, 50D, 50E verdeckt sind.

Das Fahrerhaus 50A, 50B, 50C, 50D, 50E umfasst eine Rückwandkonstruktion 52A, 52B, 52C, 52D, 52E, die einen Innenraum des Fahrerhauses 50A, 50B, 50C, 50D, 50E rückseitig begrenzt, eine Dachkonstruktion 60A, 60B, 60C, 60D, 60E, die den Innenraum oberseitig begrenzt, und eine Bodenkonstruktion (in den Figuren 1A und 1B nicht gezeigt), die den Innenraum bodenseitig begrenzt.

Das Fahrerhaus 50A, 50B, 50C, 50D, 50E umfasst ferner eine Steuervorrichtung zum Betreiben des Nutzfahrzeugs 100A, 100B, 100C, 100D, 100E in einem teilautonomen oder autonomen Fahrbetrieb, wobei die Steuervorrichtung ein Steuergerät 10 aufweist, vorzugsweise zur Steuerung zumindest einer Sensoreinrichtung und/oder zur Verarbeitung von Sensordaten zumindest einer Sensoreinrichtung.

Das Steuergerät 10 kann insbesondere zumindest abschnittweise an oder in der Dachkonstruktion 60A, 60B, 60C, 60D, 60E, an oder in der Rückwandkonstruktion 52A, 52B, 52C, 52D, 52E und/oder auf oder in der Bodenkonstruktion, vorzugsweise im Innenraum des Fahrerhauses 50A, 50B, 50C, 50D, 50E, angeordnet sein.

Das Nutzfahrzeug 100A, 100B, 100C, 100D, 100E, vorzugsweise ein Lastkraftwagen, insbesondere eine Sattelzugmaschine, ist zweckmäßig insbesondere teilautonom oder autonom betreibbar.

Beispielhaft sind fünf Ausführungsformen des Fahrerhauses 50A, 50B, 50C, 50D, 50E gezeigt, die sich im Wesentlichen durch ihre Abmessungen unterscheiden. Die Höhe variiert dabei insbesondere durch die jeweilige Höhe der Dachkonstruktion 60A, 60B, 60C, 60D, 60E. Die Länge kann insbesondere dadurch variieren, inwieweit das Fahrerhaus 50A, 50B, 50C, 50D, 50E nach hinten über die Vorderräder 70 hinausragt.

Hierbei kann z. B. zwischen einer langen, mittellangen und kurzen Länge, einer breiten und schmalen Breite, und einer hohen, mittelhohen, normalen und flachen Höhe unterschieden werden. Die Länge, Breite und Höhe des Fahrerhauses 50A, 50B, 50C, 50D, 50E kann sich entsprechend in Längsrichtung, Querrichtung und Hochrichtung des Nutzfahrzeugs 100A, 100B, 100C, 100D, 100E erstrecken.

Das Fahrerhaus 50A kann z. B. lang, breit und hoch ausgeführt sein. Das Fahrerhaus 50B kann z. B. lang und mittelhoch ausgeführt sein. Zudem kann das Fahrerhaus 50B breit oder schmal sein, dargestellt durch die gepunkteten Linien in der Draufsicht.

Das Steuergerät 10 kann z. B. an der Dachkonstruktion 60A, 60B und, insbesondere im Wesentlichen mittig, an der Rückwandkonstruktion 52A, 52B im Innenraum des Fahrerhauses 50A, 50B angeordnet sein. Wie in der jeweiligen Draufsicht gezeigt ist, ist es möglich, dass das Steuergerät 10, in Längsrichtung gesehen, hinter der Antriebsachse 72 angeordnet ist.

An der Rückseite der Rückwandkonstruktion 52A, 52B kann außen eine Luftleitvorrichtung 54A, 54B angebracht sein, die Außenseitenblenden, z. B. Sideflaps, und/oder einen Dachspoiler aufweisen kann.

Das Fahrerhaus 50C kann z. B. ebenfalls lang ausgeführt sein. Zudem kann das Fahrerhaus 50C breit oder schmal bzw. normal oder flach sein, dargestellt durch die gepunkteten Linien in der Seitenansicht und Draufsicht. Das Steuergerät 10 kann z. B. seitlich an der Rückwandkonstruktion 52C, beispielsweise oberhalb einer der Vorderräder 70, angeordnet sein.

An der Rückseite der Rückwandkonstruktion 52C kann außen ebenfalls eine Luftleitvorrichtung 54C angebracht sein.

Das Fahrerhaus 50D kann z. B. mittellang und schmal ausgeführt sein. Das Fahrerhaus 50E kann z. B. kurz und schmal ausgeführt sein. Zudem können die Fahrerhäuser 50D, 50E normal oder flach sein, dargestellt durch die gepunkteten Linien in der jeweiligen Seitenansicht. Das Steuergerät 10 kann z. B. im Wesentlichen mittig an der Rückwandkonstruktion 52D, 52E angeordnet sein. Das Steuergerät 10 kann ferner in einem unteren Bereich des Innenraums bzw. (deutlich) beabstandet von der Dachkonstruktion 60D, 60E angeordnet sein.

Figur 2 zeigt ein beispielhaftes Steuergerät 10, wobei das Steuergerät 10 zumindest eine Rechnereinheit 12, vorzugsweise mehrere, insbesondere übereinandergestapelte, Rechnereinheiten 12, und eine Kühlvorrichtung 16 für die zumindest eine Rechnereinheit 12 aufweist. Die Kühlvorrichtung 16 kann z. B. gemäß einer bekannten Kühlmittelkühlung, insbesondere Wasserkühlung, ausgebildet sein.

Die Kühlvorrichtung 16 kann z. B. einen Kühlmittelausgleichsbehälter, eine Pumpe, insbesondere eine Kühlmittel-Pumpe, und/oder ein Steuerventil, insbesondere ein Thermostatventil, zur steuerbaren und/oder regelbaren Kühlung der zumindest einen Rechnereinheit 12 mittels eines Kühlmittels aufweisen. Die zumindest eine Rechnereinheit 12 kann von dem Kühlmittel umströmbar und/oder zumindest einen Kanal zur Hindurchleitung des Kühlmittels aufweisen.

Die zumindest eine Rechnereinheit 12 kann in einem ersten, vorzugsweise kastenförmigen, Gehäuse 14 und die Kühlvorrichtung 16 kann in einem zweiten, vorzugsweise kastenförmigen, Gehäuse 18, das an dem ersten Gehäuse 14 anliegt, angeordnet sein. Zumindest ein Kühlmitteldurchgang zwischen dem ersten Gehäuse 14 und dem zweiten Gehäuse 18 kann zur Herstellung eines Kühlmittelkreislaufs zwischen der Kühlvorrichtung 16 und der zumindest einen Rechnereinheit 12 ausgebildet sein.

Das Steuergerät 10 kann ferner ein Außengehäuse 24 und/oder eine Außenverkleidung 24 aufweisen, in dem und/oder in der das erste Gehäuse 14 und das zweite Gehäuse 18 aufgenommen sein kann.

In Figur 2 ist gezeigt, dass das zweite Gehäuse 18 neben dem ersten Gehäuse 14 angeordnet ist. Alternativ kann das zweite Gehäuse 18 auf dem ersten Gehäuse 14 angeordnet sein.

Eine Längsrichtung des zweiten Gehäuses 18 kann insbesondere im Wesentlichen parallel zu einer Längs-, Breiten- oder Hochrichtung des ersten Gehäuses 14 verlaufen.

Das erste Gehäuse 14 kann eine Länge von mindestens 50 cm, eine Breite von mindestens 30 cm und/oder eine Höhe von mindestens 40 cm aufweisen. Das zweite Gehäuse 18 kann eine Länge von mindestens 30 cm, eine Breite von mindestens 15 cm und/oder eine Höhe von mindestens 15 cm aufweisen. Die Anordnung des ersten Gehäuses 14 und des zweiten Gehäuses 18 kann ein Volumen von mindestens 90 I aufweisen.

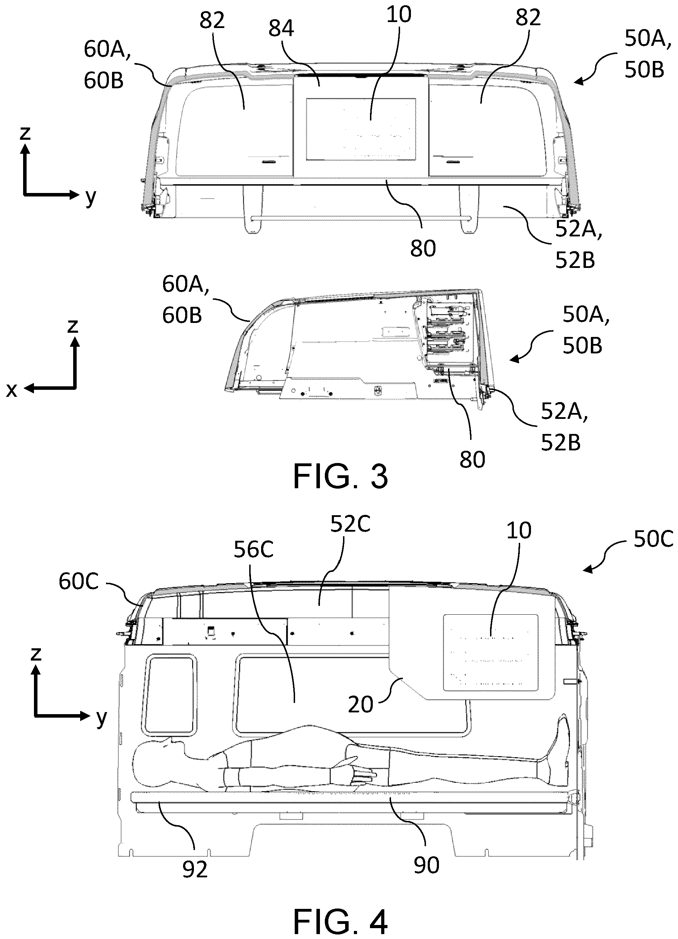

In den Figuren 3 bis 9, 11 bis 15 sind die Darstellungen zum vereinfachten Vergleich bezüglich der angezeigten x-, y- und z-Richtung gleich ausgerichtet. Die x-Richtung kann insbesondere der Längsrichtung bzw. der Vorwärtsfahrtrichtung des Nutzfahrzeugs 100A, 100B, 100C, 100D, 100E entsprechen. Die x-Richtung zeigt somit z. B. innerhalb des Innenraums von der Rückwandkonstruktion 52A, 52B, 52C, 52D, 52E weg. Die y-Richtung kann der Querrichtung des Nutzfahrzeugs 100A, 100B, 100C, 100D, 100E und die z-Richtung kann die Hochrichtung des Nutzfahrzeugs 100A, 100B, 100C, 100D, 100E entsprechen.

Die Figuren 3 bis 9 zeigen Anordnungsmöglichkeiten des Steuergeräts 10 innerhalb des Innenraums der beispielhaften Fahrerhäuser 50A, 50B, 50C, 50D, 50E. Es versteht sich, dass die jeweilige Anordnung des Steuergeräts 10 nicht auf das jeweilige beispielhafte Fahrerhaus 50A, 50B, 50C, 50D, 50E aus den Figuren 1A und 1B beschränkt ist und im Wesentlichen auf jedes Fahrerhaus eines Nutzfahrzeugs übertragbar ist. Ferner sind die einzelnen Anordnungsmöglichkeiten auch miteinander kombinierbar.

Wie in Figur 3 gezeigt, kann Fahrerhaus 50A, 50B ferner eine Ablage 80 umfassen, die an der Dachkonstruktion 60A, 60B und/oder an der Rückwandkonstruktion 52A, 52B ausgebildet und/oder befestigt ist. Das Steuergerät 10 kann, vorzugsweise mittig und/oder seitlich, in die Ablage 80 integriert sein.

Die Ablage 80 kann mehrere, z. B. drei, Ablagefächer 82, 84 aufweisen, wobei das Steuergerät 10 in einem mittleren Ablagefach 84 untergebracht ist. Es ist auch vorstellbar, dass das Steuergerät in einem der seitlichen Ablagefächer 82 untergebracht ist. Die Ablagefächer 82, 84 können verschließbar sein.

Die Ablage 80 kann insbesondere derart ausgebildet sein, dass das Steuergerät 10 in einem oberen Bereich des Innenraums, der insbesondere vollständig von der Dachkonstruktion 60A, 60B umgeben ist, angeordnet ist.

Wie in Figur 4 gezeigt, kann das Steuergerät 10 hängend an der Dachkonstruktion 60C angeordnet, insbesondere befestigt, sein. Das Steuergerät 10 kann z. B. derart an der Rückwandkonstruktion 52C angeordnet sein, dass es ein Fenster 56C in der Rückwandkonstruktion 52C zumindest abschnittsweise überdeckt.

Das Fahrerhaus 50C kann ferner eine Liege 90 umfassen, die vorzugsweise an der Rückwandkonstruktion 52C angeordnet sein kann. Das Steuergerät 10 kann, insbesondere hängend, oberhalb der Liege 90 angeordnet sein und z. B. eine zu einem Kopfbereich 92 der Liege 90 hin zumindest abschnittweise abgeschrägte Seitenwand 20 aufweisen.

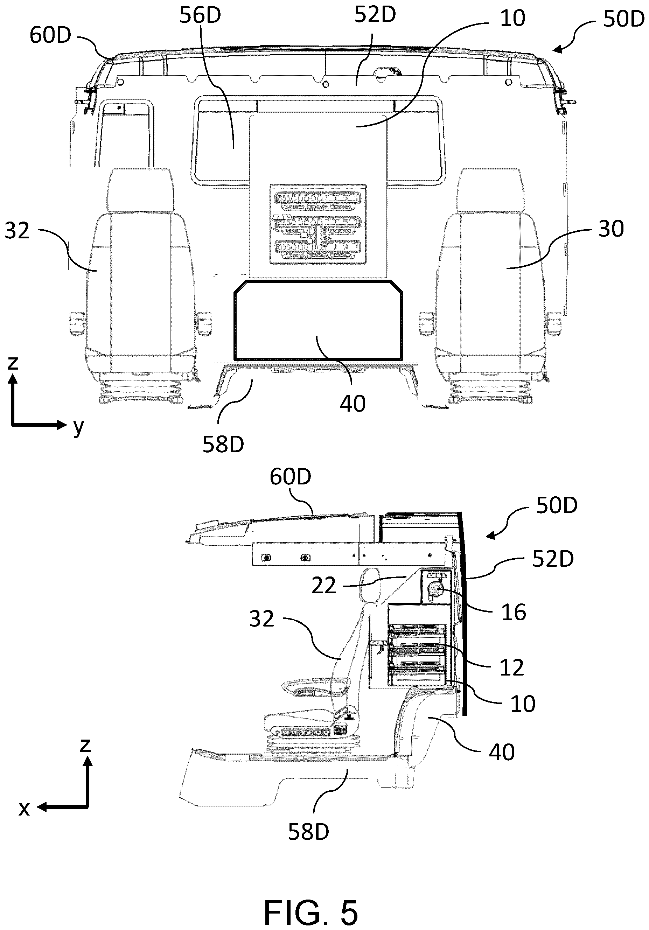

Wie in Figur 5 gezeigt, kann das Fahrerhaus 50D ferner einen Luftfilterkasten 40 umfassen, der vorzugsweise an der Rückwandkonstruktion 52D und/oder auf der Bodenkonstruktion 58D angeordnet ist., wobei das Steuergerät 10 auf dem Luftfilterkasten 40 angeordnet ist. Das Steuergerät kann so z. B. an der Rückwandkonstruktion 52D und (indirekt) auf der Bodenkonstruktion 58D angeordnet sein, wobei der Luftfilterkasten 40 zwischen dem Steuergerät 10 und der Bodenkonstruktion 58D vorgesehen ist.

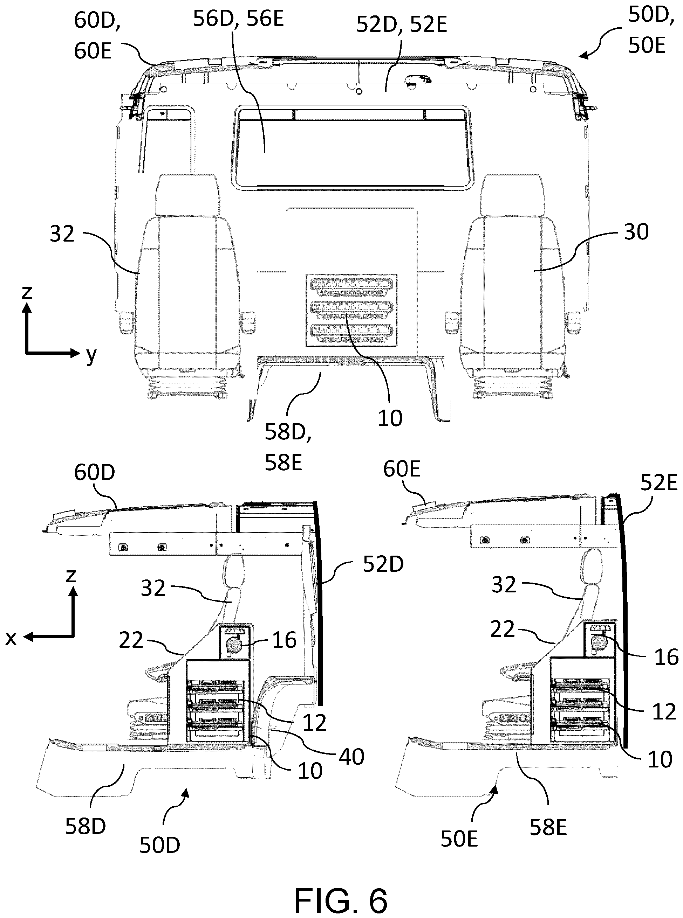

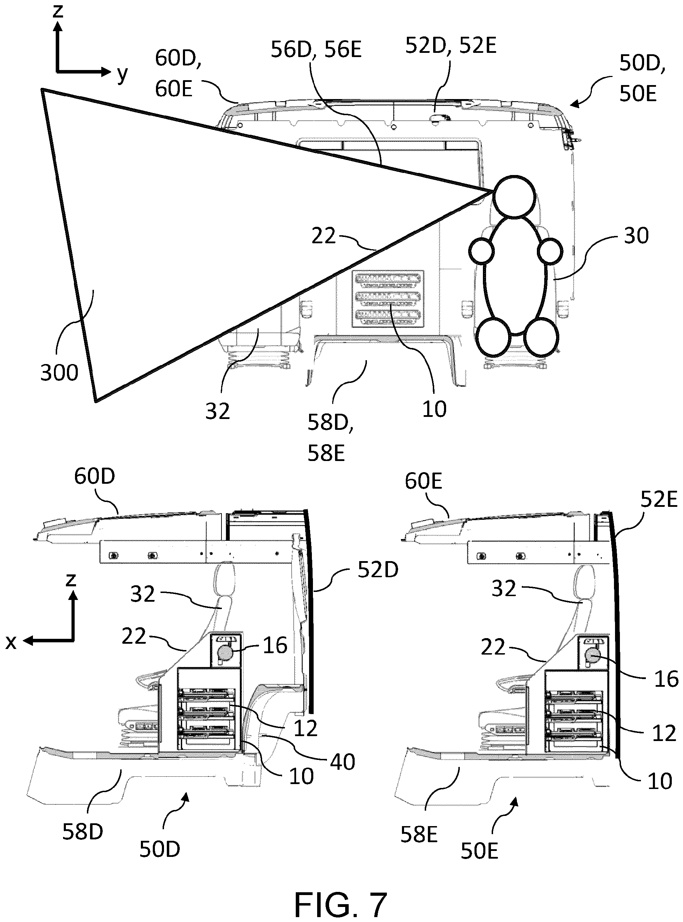

Wie in den Figuren 6 und 7 gezeigt, kann das Steuergerät auch direkt auf der Bodenkonstruktion 58D, 58E angeordnet sein, insbesondere vor dem Luftfilterkasten 40 und/oder an der Rückwandkonstruktion 52D, 52E.

Das Fahrerhaus 50D, 50E kann ferner einen Fahrersitz 30 und einen Beifahrersitz 32 umfassen, wobei das Steuergerät 10 zumindest abschnittsweise zwischen dem Fahrersitz 30 und dem Beifahrersitz 32 angeordnet sein kann.

Das Steuergerät 10 kann eine zum Beifahrersatz 32 hin und/oder von der Rückwandkonstruktion 52D, 52E weg zumindest abschnittsweise, insbesondere nach unten, abgeschrägte Seitenwand 22 aufweisen. Dadurch kann verhindert werden, dass ein Sichtfeld 300 eines Fahrers innerhalb des Innenraums, insbesondere zur Beifahrerseite hin, durch das Steuergerät 10 eingeschränkt wird.

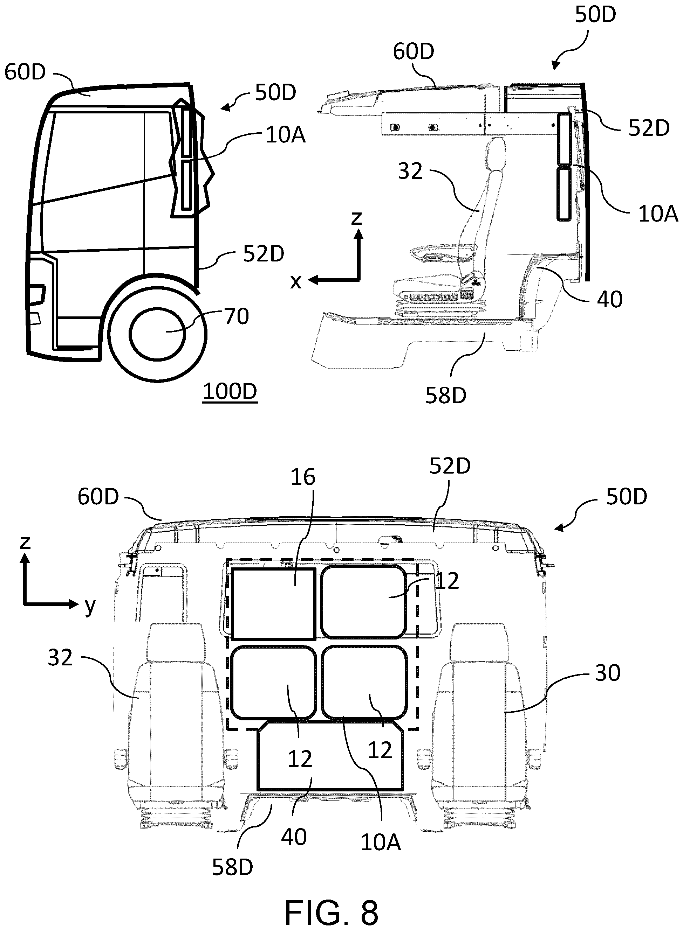

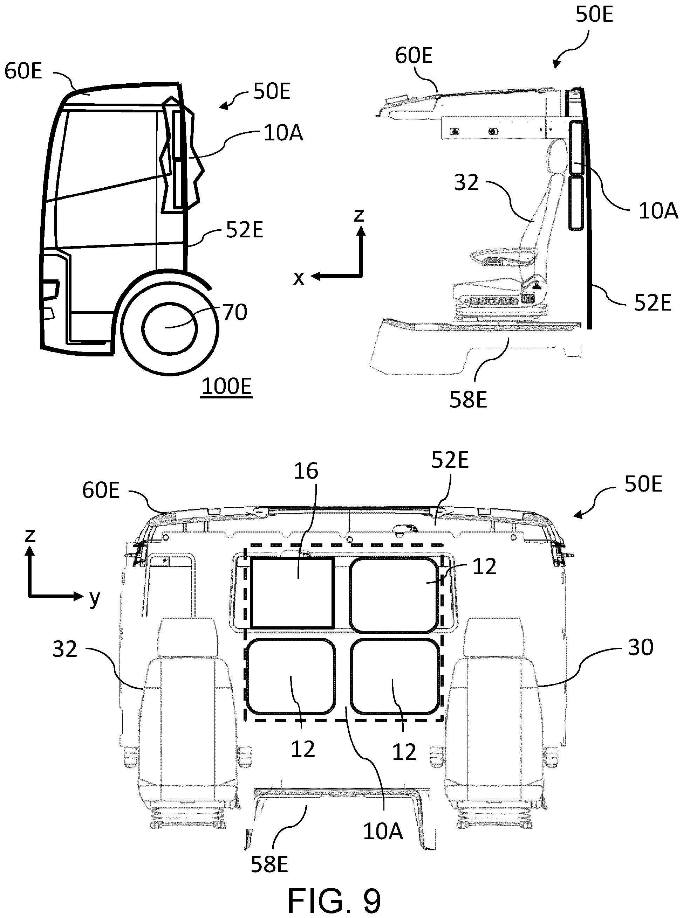

Die Figuren 8 und 9 zeigen eine alternative Ausführungsform des Steuergeräts 10A, wobei das Steuergerät 10A mehrere Rechnereinheiten 12 aufweist, die kachelartig an der Rückwandkonstruktion 52D, 52E angeordnet sein können. Die mehreren Rechnereinheiten 12 und die Kühlvorrichtung 16 können z. B: an einem mittleren Bereich der Rückwandkonstruktion 52D, 52E kachelartig angeordnet sein, wobei jede der mehreren Rechnereinheiten 12 und die Kühlvorrichtung 16 z. B. im Wesentlichen gleiche Maße aufweisen können und/oder in einem Traggestell aufgenommen sind.

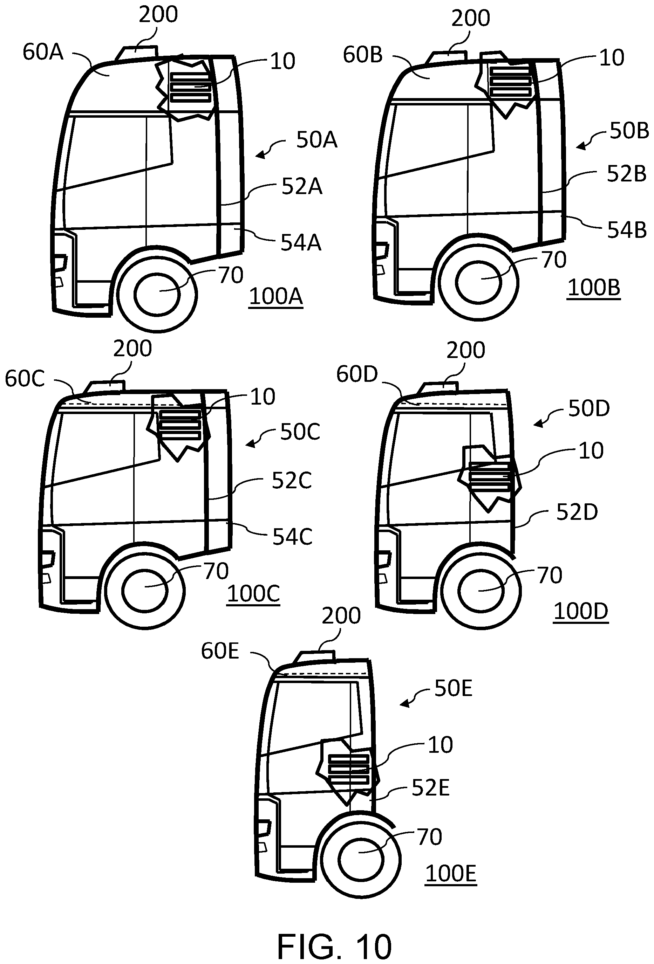

Figur 10 zeigt Seitenansichten von jeweils einem vorderen Abschnitt des Nutzfahrzeugs 100A, 100B, 100C, 100D, 100E, die im Wesentlichen den Seitenansichten aus den Figuren 1A und 1B entsprechen, wobei die Fahrerhäuser 50A, 50B, 50C, 50D, 50E jeweils ferner ein Kühlmodul 200 zum Kühlen des Steuergeräts 10 aufweisen, wobei das Kühlmodul 200 zweckmäßig der Steuervorrichtung zugeordnet sein kann.

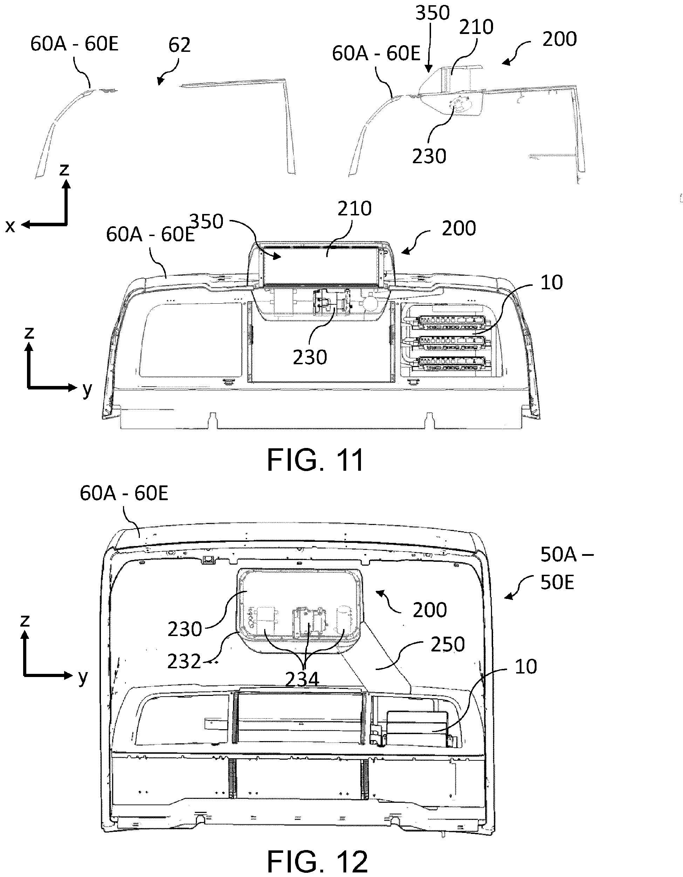

Wie in Figur 11 gezeigt, kann das Kühlmodul 200 zumindest abschnittsweise an oder in einer Dachluke 62 der Dachkonstruktion 60A, 60B, 60C, 60D, 60E angeordnet sein.

Das Kühlmodul 200 kann einen ersten Abschnitt 210 umfassen, der außerhalb des Innenraums angeordnet sein kann und/oder der zumindest eine Lufteinlassöffnung 350 aufweisen kann.

Das Kühlmodul 200 kann einen zweiten Abschnitt 230 umfassen, der innerhalb des Innenraums angeordnet sein kann.

Der zweite Abschnitt 230 kann eine innere Abdeckung 232 und/oder einen Tragrahmen 232 aufweisen, in der z. B. eine Kühlvorrichtung 234 zur steuerbaren Kühlung des Steuergeräts 10 mittels eines Kühlmittels untergebracht sein. Die Kühlvorrichtung 234 kann z. B. einen Kühlmittelausgleichsbehälter, eine Pumpe, insbesondere eine Kühlmittel-Pumpe, und/oder ein Steuerventil, insbesondere ein Thermostatventil, aufweisen.

Die Kühlvorrichtung 234 und die Kühlvorrichtung 16 können alternativ oder ergänzend vorgesehen sein. Entsprechend ist es möglich, dass die zumindest eine Rechnereinheit 12 über zumindest zwei separate Kühlmittelkreisläufe, nämlich über einen ersten Kühlmittelkreislauf zwischen der Kühlvorrichtung 16 und der zumindest einen Rechnereinheit 12 und über einen zweiten Kühlmittelkreislauf zwischen der Kühlvorrichtung 234 und der zumindest einen Rechnereinheit 12, kühlbar ist.

Die Steuervorrichtung oder allgemein das Fahrerhaus 50A, 50B, 50C, 50D, 50E kann ferner einen Kanal 250 für zumindest eine Luft- und/oder Kühlmittelleitung und vorzugsweise zumindest eine Stromleitung zwischen dem Kühlmodul 200 und dem Steuergerät 10 aufweisen. Zumindest eine Kühlmittelleitung kann die Kühlvorrichtung 234 mit der zumindest einen Rechnereinheit 12 des Steuergeräts 10 zur Herstellung eines Kühlmittelkreislaufs verbinden. Die zumindest eine Stromleitung kann zum Betreiben der Kühlvorrichtung 234 dienen.

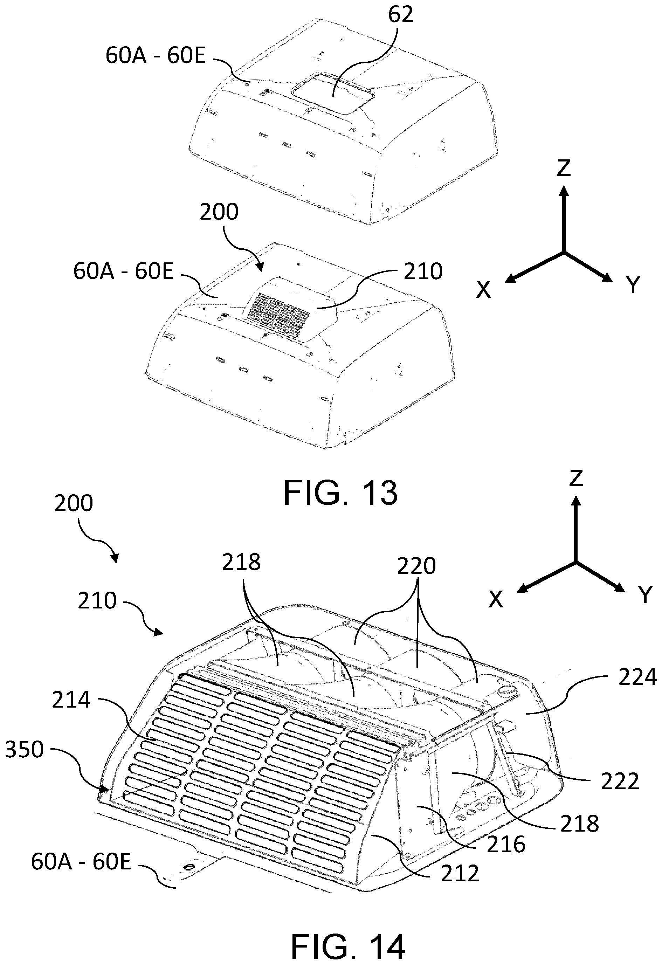

Figur 13 zeigt weitere Ansichten der Dachkonstruktion 60A, 60B, 60C, 60D, 60E mit der Dachluke 62, ohne und mit eingebautem Kühlmodul 200.

Wie in Figur 14 gezeigt, kann der erste Abschnitt 210 eine äußere Abdeckung 224 mit einem Luftleitelement 212 zum Einleiten von Luft aufweisen. Das Luftleitelement kann ein Einlassgitter 214 umfassen.

Die äußere Abdeckung 224 kann einen Tragrahmen 222 aufweisen, an dem das Luftleitelement 212 befestigt ist. Eine Kühlanordnung 216 zum Kühlen der eingelassenen Luft kann innerhalb der äußeren Abdeckung 224 untergebracht sein, wobei die Kühlanordnung 216 z. B. einen Kühler und/oder einen Kondensator umfassen kann.

Zumindest ein Lüfter 220 kann zum Ansaugen der eingelassenen Luft innerhalb der äußeren Abdeckung 224 untergebracht sein, wobei die Kühlanordnung 216 zwischen dem Luftleitelement 212 und dem zumindest einen Lüfter 220 angeordnet sein kann. Zwischen jedem des zumindest einen Lüfters 220 und der Kühlanordnung 216 kann jeweils eine Luftführung 218 zum jeweiligen Lüfter angeordnet sein.

Die eingelassene und gekühlte Luft kann zur Kühlung des Kühlmittels der Kühlvorrichtung 234 in den zweiten Abschnitt 230 einleitbar sein. Alternativ oder ergänzend kann der Kanal 250 zumindest eine Luftleitung zur Weiterleitung der eingelassenen und gekühlten Luft zum Steuergerät 10 aufweisen, insbesondere zur Kühlung des Kühlmittels der Kühlvorrichtung 16 und/oder zur direkten Kühlung der zumindest einen Rechnereinheit 12.

Das Fahrerhaus 50A; 50B; 50C; 50D; 50E und/oder das Kühlmodul 20 kann zumindest eine Lufteinlassöffnung 350 umfassen, die vorzugsweise auf oder in der Dachkonstruktion 60A; 60B; 60C; 60D; 60E angeordnet sein kann und zur Kühlluftversorgung mit dem Steuergerät 10, 10A, der Kühlvorrichtung 16, 234, dem Kühlmodul 200 und/oder der Kühlanordnung 216 verbunden sein kann. Die Lufteinlassöffnung 350 kann z. B. im Kühlmodul 200, insbesondere in dessen Gehäuse ausgebildet sein.

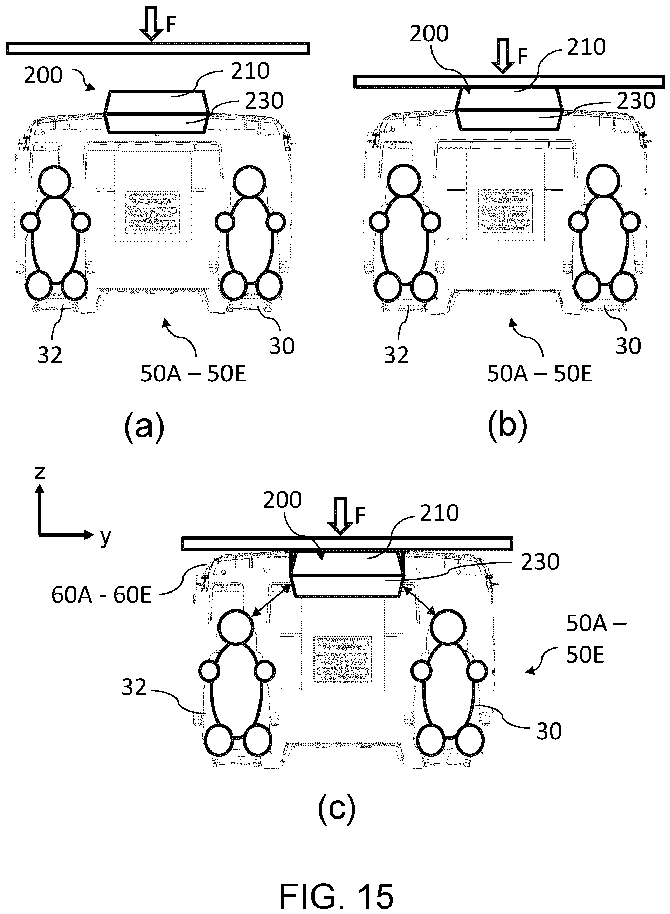

Figur 15 stellt das Fahrerhaus 50A, 50B, 50C, 50D, 50E mit dem Kühlmodul 200 in einem Crashlastfall dar, wobei im Verlauf der Darstellungen (a), (b) und (c) eine Kraft F (z. B. etwa 10 t bei einem statischen Crashtest ECE R29-3) von oben auf das Fahrerhaus 50A, 50B, 50C, 50D, 50E wirkt und das Kühlmodul 200 nach unten drückt.

Das Kühlmodul 200 kann (z. B. in und/oder an der Dachluke) vorzugsweise mittels einer Fallsicherung (z. B. ein Fangband, ein Fangseil, eine Fangkulisse und/oder eine Gleitschiene etc.) befestigt sein, vorzugweise so, dass das Kühlmodul 200 (z. B. im Wesentlichen vollständig) in den Innenraum eintauchbar und/oder beförderbar ist. Insbesondere kann das Kühlmodul 200 z. B. in einem Crashlastfall vorzugweise im Wesentlichen vollständig in den Innenraum eintauchbar und/oder beförderbar sein, vorteilhaft ohne gänzlich herunterzufallen, weil insbesondere durch die Fallsicherung gesichert. Die Dachkonstruktion 60A, 60B, 60C, 60D, 60E kann dabei vorteilhaft die gleiche Crashperformance behalten wie ohne bzw. mit Dachluke 62.

Damit im Crashlastfall keine Gefahr für einen Fahrer und/oder ein Beifahrer besteht, kann die Dachluke 62 oberhalb eines Abschnitts des Innenraums zwischen einem Fahrersitz 30 und einem Beifahrersitz 32, und damit insbesondere nicht direkt oberhalb einer der Sitze 30, 32, ausgebildet sein. Eine Höhe des Kühlmoduls 200 kann kleiner sein als ein Abstand der Dachluke 62 zum Fahrersitz 30 und/oder Beifahrersitz 32. Ferner kann eine Länge und/oder eine Breite des Kühlmoduls 200 kleiner sein als ein Abstand zwischen dem Fahrersitz und dem Beifahrersitz 32.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale der unabhängigen Ansprüche jeweils unabhängig voneinander offenbart. Zusätzlich sind auch die Merkmale der Unteransprüche unabhängig von sämtlichen Merkmalen der unabhängigen Ansprüche offenbart.

### Bezugszeichenliste

- 10, 10A: Steuergerät
- 12: Zumindest eine Rechnereinheit
- 14: Erstes Gehäuse
- 16: Kühlvorrichtung
- 18: Zweites Gehäuse
- 20, 22: Abgeschrägte Seitenwand
- 24: Außengehäuse, Außenverkleidung
- 30: Fahrersitz
- 32: Beifahrersitz
- 40: Luftfilterkasten
- 50A, 50B, 50C, 50D, 50E: Fahrerhaus
- 52A, 52B, 52C, 52D, 52E: Rückwandkonstruktion
- 54A, 54B, 54C: Luftleitvorrichtung
- 56C, 56D, 56E: Fenster
- 58D, 58E: Bodenkonstruktion
- 60A, 60B, 60C, 60D, 60E: Dachkonstruktion
- 62: Dachluke
- 70: Vorderrad
- 72: Antriebsachse
- 80: Ablage
- 82, 84: Ablagefach
- 90: Liege
- 92: Kopfbereich
- 100A, 100B, 100C, 100D, 100E: Nutzfahrzeug
- 200: Kühlmodul
- 210: Erster Abschnitt
- 212: Luftleitelement
- 214: Einlassgitter
- 216: Kühlanordnung
- 218: Luftführung
- 220: Zumindest ein Lüfter
- 222: Tragrahmen
- 224: Äußere Abdeckung
- 230: Zweiter Abschnitt
- 232: Innere Abdeckung, Tragrahmen
- 234: Kühlvorrichtung
- 250: Zumindest ein Kanal
- 300: Sichtfeld
- 350: Zumindest eine Lufteinlassöffnung

## Patentansprüche

1. Fahrerhaus (50A; 50B; 50C; 50D; 50E) für ein teilautonom oder autonom betreibbares Nutzfahrzeug (100A; 100B; 100C; 100D; 100E), vorzugsweise Lastkraftwagen, insbesondere Sattelzugmaschine, umfassend:
eine Dachkonstruktion (60A; 60B; 60C; 60D; 60E), die einen Innenraum des Fahrerhauses (50A; 50B; 50C; 50D; 50E) oberseitig begrenzt;
eine Steuervorrichtung zum Betreiben des Nutzfahrzeugs (100A; 100B; 100C; 100D; 100E) in einem teilautonomen oder autonomen Fahrbetrieb, wobei die Steuervorrichtung ein Steuergerät (10; 10A) aufweist, vorzugsweise zur Steuerung zumindest einer Sensoreinrichtung und/oder zur Verarbeitung von Sensordaten zumindest einer Sensoreinrichtung, und
ein Kühlmodul (200) zum Kühlen des Steuergeräts (10; 10A), **dadurch gekennzeichnet, dass**
das Kühlmodul (200) zumindest abschnittsweise an oder in einer Dachluke (62) der Dachkonstruktion (60A; 60B; 60C; 60D; 60E) angeordnet ist.

2. Fahrerhaus (50A; 50B; 50C; 50D; 50E) nach Anspruch 1, wobei das Kühlmodul (200), vorzugsweise mittels einer Fallsicherung, an oder in der Dachluke (62) angeordnet ist, um in einem Crashlastfall im Wesentlichen vollständig in den Innenraum eintauchbar und/oder beförderbar zu sein.

3. Fahrerhaus (50A; 50B; 50C; 50D; 50E) nach Anspruch 1 oder 2, wobei
die Dachluke (62) in einem mittleren, insbesondere zentralen, Bereich der Dachkonstruktion (60A; 60B; 60C; 60D; 60E) ausgebildet ist;
die Dachluke (62) oberhalb eines Abschnitts des Innenraums zwischen einem Fahrersitz (30) und einem Beifahrersitz (32) ausgebildet ist;
eine Höhe des Kühlmoduls (200) kleiner ist als ein Abstand der Dachluke (62) zu einem Fahrersitz (30) und/oder einem Beifahrersitz (32); und/oder
eine Länge und/oder Breite des Kühlmoduls (200) kleiner ist als ein Abstand zwischen einem Fahrersitz (30) und einem Beifahrersitz (32).

4. Fahrerhaus (50A; 50B; 50C; 50D; 50E) nach einem der vorherigen Ansprüche,
umfassend eine Kühlvorrichtung (16; 234) und/oder eine Kühlanordnung (216) zum Kühlen des Steuergeräts (10; 10A), vorzugsweise zumindest einer Rechnereinheit (12) des Steuergeräts (10; 10A), und/oder
wobei die Kühlvorrichtung (16; 234), die Kühlanordnung (216) und/oder das Kühlmodul (200) einen Kühlmittelausgleichsbehälter, zumindest einen Lüfter (220), eine Kühlmittel-Pumpe, einen Verdampfer, einen Kondensator, ein Expansionsventil und/oder ein Steuerventil zur steuerbaren oder regelbaren Kühlung des Steuergeräts (10; 10A), vorzugsweise zumindest einer Rechnereinheit (12) des Steuergeräts (10; 10A), mittels eines Kühlmittels aufweist.

5. Fahrerhaus (50A; 50B; 50C; 50D; 50E) nach einem der vorherigen Ansprüche, wobei das Kühlmodul (200) einen ersten Abschnitt (210) umfasst, der außerhalb des Innenraums angeordnet ist und/oder der zumindest eine Lufteinlassöffnung (350) aufweist.

6. Fahrerhaus (50A; 50B; 50C; 50D; 50E) nach Anspruch 5, wobei der erste Abschnitt (210) eine äußere Abdeckung (224) mit der zumindest einen Lufteinlassöffnung und vorzugsweise zumindest einem Luftleitelement (212) zum Einleiten von Luft aufweist, vorzugsweise wobei der erste Abschnitt (210) und/oder die äußere Abdeckung (224) einen Tragrahmen (222), an dem das zumindest eine Luftleitelement (212) befestigt ist, und/oder zumindest einen Lüfter (220) zum Ansaugen von Luft umfasst.

7. Fahrerhaus (50A; 50B; 50C; 50D; 50E) nach einem der Ansprüche 4 bis 6, wobei der erste Abschnitt (210) die Kühlanordnung (216) umfasst, vorzugsweise zum Kühlen eingelassener Luft, wobei die Kühlanordnung (216) innerhalb der äußeren Abdeckung (224) untergebracht ist und/oder zwischen der Lufteinlassöffnung (350) und dem zumindest einen Lüfter (220) angeordnet ist.

8. Fahrerhaus (50A; 50B; 50C; 50D; 50E) nach einem der vorherigen Ansprüche, wobei das Kühlmodul (200) einen zweiten Abschnitt (230) umfasst, der innerhalb des Innenraums angeordnet ist, vorzugsweise wobei der zweite Abschnitt (230) eine innere Abdeckung (232) und/oder einen Tragrahmen (232) aufweist.

9. Fahrerhaus (50A; 50B; 50C; 50D; 50E) nach Anspruch 8, wobei der zweite Abschnitt (230) die Kühlvorrichtung (234) umfasst, vorzugsweise wobei Kühlmittel der Kühlvorrichtung (234) mittels eingelassener Luft kühlbar ist, die Kühlvorrichtung (234) innerhalb der inneren Abdeckung (232) angeordnet ist und/oder innerhalb des Tragrahmens (232) angeordnet ist.

10. Fahrerhaus (50A; 50B; 50C; 50D; 50E) nach einem der vorherigen Ansprüche, ferner umfassend:
eine Rückwandkonstruktion (52A; 52B; 52C; 52D; 52E), die den Innenraum rückseitig begrenzt; und
eine Bodenkonstruktion (58D; 58E), die den Innenraum bodenseitig begrenzt,
wobei das Steuergerät (10; 10A) zumindest abschnittweise an oder in der Dachkonstruktion (60A; 60B; 60C; 60D; 60E), an oder in der Rückwandkonstruktion (52A; 52B; 52C; 52D; 52E) oder auf oder in der Bodenkonstruktion (58D; 58E) angeordnet ist, vorzugsweise im Innenraum des Fahrerhauses (50A; 50B; 50C; 50D; 50E).

11. Fahrerhaus (50A; 50B; 50C; 50D; 50E) nach einem der vorherigen Ansprüche, ferner umfassend:
eine Ablage (80), die an der Dachkonstruktion (60A; 60B; 60C; 60D; 60E) und/oder an der Rückwandkonstruktion (52A; 52B; 52C; 52D; 52E) befestigt ist, wobei das Steuergerät (10), vorzugsweise mittig und/oder seitlich, in die Ablage (80) integriert ist.

12. Fahrerhaus (50A; 50B; 50C; 50D; 50E) nach einem der vorherigen Ansprüche, wobei das Steuergerät (10) hängend an der Dachkonstruktion (60A; 60B; 60C; 60D; 60E) angeordnet ist.

13. Fahrerhaus (50A; 50B; 50C; 50D; 50E) nach einem der vorherigen Ansprüche, ferner umfassend:
eine Liege (90), die vorzugsweise an der Rückwandkonstruktion (52A; 52B; 52C; 52D; 52E) angeordnet ist, wobei das Steuergerät (10) oberhalb der Liege (90) angeordnet ist und vorzugsweise eine zu einem Kopfbereich (92) der Liege (90) zumindest abschnittweise abgeschrägte Seitenwand (20) aufweist.

14. Fahrerhaus (50A; 50B; 50C; 50D; 50E) nach einem der vorherigen Ansprüche, ferner umfassend:
einen Luftfilterkasten (40), vorzugsweise an der Rückwandkonstruktion (52A; 52B; 52C; 52D; 52E) und/oder auf der Bodenkonstruktion (58D; 58E), wobei das Steuergerät (10) auf oder vor dem Luftfilterkasten (40) angeordnet ist.

15. Fahrerhaus (50A; 50B; 50C; 50D; 50E) nach einem der vorherigen Ansprüche, wobei das Steuergerät (10; 10A) zumindest eine Rechnereinheit (12), vorzugsweise mehrere, insbesondere übereinandergestapelte, Rechnereinheiten (12) aufweist, und das Steuergerät (10; 10A) und/oder die zumindest eine Rechnereinheit (12) mit der Kühlvorrichtung (16; 234), der Kühlanordnung (216) und/oder dem Kühlmodul (200) zum Kühlen der zumindest einen Rechnereinheit (12) verbunden ist, vorzugsweise wobei die zumindest eine Rechnereinheit (12) von dem Kühlmittel der Kühlvorrichtung (16; 234), der Kühlanordnung (216) und/oder des Kühlmoduls (200) umströmbar ist und/oder zumindest einen Kanal zur Hindurchleitung des Kühlmittels aufweist.

16. Fahrerhaus (50A; 50B; 50C; 50D; 50E) nach Anspruch 15, wobei die zumindest eine Rechnereinheit (12) in einem ersten Gehäuse (14) angeordnet ist und die Kühlvorrichtung (16) in einem zweiten Gehäuse (18) angeordnet ist, vorzugweise wobei das erste Gehäuse (14) und das zweite Gehäuse (18) aneinander anliegen und/oder aneinandergekoppelt sind und/oder wobei zumindest ein Kühlmitteldurchgang zwischen dem ersten Gehäuse (14) und dem zweiten Gehäuse (18) ausgebildet ist.

17. Fahrerhaus (50A; 50B; 50C; 50D; 50E) nach Anspruch 16, wobei
das Steuergerät (10) ein Außengehäuse (24) und/oder eine Außenverkleidung (24) aufweist, in dem das erste Gehäuse (14) und das zweite Gehäuse (18) aufgenommen sind;
das zweite Gehäuse (18) neben oder auf dem ersten Gehäuse (14) angeordnet ist,
zumindest eine Kante des zweiten Gehäuses (18) bündig an zumindest einer Kante des ersten Gehäuses (14) angeordnet ist; und/oder
eine Längsrichtung des zweiten Gehäuses (18) im Wesentlichen parallel zu einer Längs-, Breiten- oder Hochrichtung des ersten Gehäuses (14) verläuft.

18. Fahrerhaus (50A; 50B; 50C; 50D; 50E) nach einem der vorherigen Ansprüche, wobei das Steuergerät (10A) mehrere Rechnereinheiten (12) aufweist, die kachelartig angeordnet sind, vorzugsweise an der Rückwandkonstruktion (52A; 52B; 52C; 52D; 52E).

19. Fahrerhaus (50A; 50B; 50C; 50D; 50E) nach einem der vorherigen Ansprüche, wobei zumindest ein Kanal (250) zur Luft- und/oder Kühlmittelleitung und/oder mit zumindest einer Stromleitung zwischen dem Kühlmodul (200), der Kühlanordnung (216) und/oder der Kühlvorrichtung (16; 234) und dem Steuergerät (10; 10A) ausgebildet ist.

20. Fahrerhaus (50A; 50B; 50C; 50D; 50E) nach einem der vorherigen Ansprüche, umfassend zumindest eine Lufteinlassöffnung (350), die vorzugsweise in dem Kühlmodul (200) und/oder auf oder in der Dachkonstruktion (60A; 60B; 60C; 60D; 60E) angeordnet ist und zur Kühlluftversorgung mit dem Steuergerät (10; 10A), der Kühlvorrichtung (16; 234), dem Kühlmodul (200) und/oder der Kühlanordnung (216) verbunden ist.

21. Fahrerhaus (50A; 50B; 50C; 50D; 50E) nach einem der vorherigen Ansprüche, ferner umfassend:
einen Fahrersitz (30) und einen Beifahrersitz (32), wobei das Steuergerät (10), die Kühlvorrichtung (16; 234), die Kühlanordnung (216) und/oder das Kühlmodul (200) zumindest abschnittsweise zwischen dem Fahrersitz (30) und dem Beifahrersitz (32) angeordnet ist.

22. Nutzfahrzeug (100A; 100B; 100C; 100D; 100E), vorzugsweise Lastkraftwagen, insbesondere Sattelzugmaschine, mit einem Fahrerhaus (50A; 50B; 50C; 50D; 50E) nach einem der vorherigen Ansprüche, wobei das Nutzfahrzeug (100A; 100B; 100C; 100D; 100E) teilautonom oder autonom betreibbar ist.
